# EUROPÄISCHE PATENTANMELDUNG

(11) **EP 3 670 612 A1**
(43) Veröffentlichungstag der Anmeldung: **24.06.2020**
(21) Anmeldenummer: 18213339.7
(22) Anmeldetag: 18.12.2018
(51) Int. Cl.: C09D 5/00

(54) **VERWENDUNG VON URETHANMETHACRYLAT-VERBINDUNGEN IN REAKTIVHARZ-ZUSAMMENSETZUNGEN**

(71) Anmelder: Hilti Aktiengesellschaft, 9494 Schaan (LI)
(72) Erfinder: Nickerl, Georg, 86911 Dießen am Ammersee (DE); Gnaß, Beate, 86368 Gersthofen (DE); Bunzen, Jens, 86159 Augsburg (DE)
(74) Vertreter: Hilti Aktiengesellschaft Corporate Intellectual Property

(57) **Zusammenfassung**

Es wird die Verwendung von niedrigviskosen Urethanmethacrylat-Verbindungen in einer Reaktivharzkomponente zur Verbesserung der thixotropen Eigenschaften der Reaktivharzkomponente und/oder des Nachlaufverhaltens eines die Reaktivharzkomponente umfassenden Reaktivharz-Systems beschrieben.

## Beschreibung

Die Erfindung betrifft niedrigviskose Urethanmethacrylat-Verbindungen als Backbone-Harze, insbesondere deren Verwendung in Reaktivharzkomponenten für bauliche Zwecke, insbesondere chemische Befestigung zur Verbesserung der thixotropen Eigenschaften und des Nachlaufverhaltens.

Die derzeit eingesetzten radikalisch härtbaren Befestigungsmassen basieren auf ungesättigten Polyestern, Vinylesterurethanharzen und Epoxyacrylaten. Es handelt sich dabei meist um Zweikomponenten-Reaktivharz-Systeme, wobei eine Komponente das Harz (sogenannte Komponente (A)) und die andere Komponente (Komponente (B)) das Härtungsmittel enthält. Weitere Bestandteile wie anorganische Füllmittel und Additive, Beschleuniger, Stabilisatoren und Reaktivverdünner können in der einen und/oder der anderen Komponente enthalten sein. Durch Vermischen der beiden Komponenten wird die Härtung der gemischten Komponenten in Gang gesetzt. Bei Verwendung der Befestigungsmassen zur Befestigung von Verankerungselementen in Bohrlöchern erfolgt die Härtung in den Bohrlöchern.

Eine solche Befestigungsmasse ist beispielsweise aus der DE 3940138 A1 bekannt. Diese beschreibt Befestigungsmassen auf Basis von cycloaliphatische Gruppen tragenden Monomeren, die zusätzlich ungesättigte Polyester- oder Vinylesterharze enthalten können. Derartige Befestigungsmassen weisen aber verhältnismäßig hohe Viskositäten auf, wodurch ihre Anwendung, vor allem für die chemische Befestigungstechnik beschränkt wird.

Auf Baustellen können relativ große Temperaturbereiche von beispielsweise -25°C bis +45°C auftreten, je nach Jahreszeit und/oder geographischer Lage. Daher kann die hohe Viskosität bei den eingangs beschriebenen härtbaren Befestigungsmassen und deren resultierendes thixotropes Verhalten bei der Anwendung zu Problemen führen. Daher werden große Anforderungen an den Einsatzbereich, insbesondere den Einsatz in verschiedenen Temperaturbereichen, derartiger Befestigungsmassen gestellt.

Zum einen sollte im niedrigen Temperaturbereich eine ausreichend niedrige Viskosität der Masse beim Auspressen gewährleistet werden, so dass die Masse einen nicht zu hohen Strömungswiderstand aufweist. Damit soll sichergestellt werden, dass die Massen beispielsweise mit einem Handdispenser verarbeitet, z.B. in das Bohrloch injiziert werden kann. Insbesondere bei der Verwendung von Statikmischern ist eine niedrige Viskosität für eine einwandfreie Vermischung der beiden Komponenten von Bedeutung.

Zum anderen sollte die Masse über den gesamten Temperaturbereich hinreichend thixotrop sein, so dass ein Nachlaufen der einzelnen Komponenten nach Beendigung des Auspressens verhindert wird sowie bei der Überkopf-Montage die Masse nicht aus dem Bohrloch herausläuft.

Ein weiteres durch Temperaturschwankungen bedingtes Problem ist, dass die radikalische Kettenpolymerisation nicht einheitlich abläuft. Die ausgehärtete Befestigungsmasse weist somit eine schwankende/unregelmäßige und häufig unzureichende Homogenität aus, was sich in Schwankungen der Lastwerte und häufig auch in generell niedrigen Lastwerten wiederspiegelt. Beispielsweise kann es bei Temperaturen unter 20°C durch eine Erhöhung der Viskosität zu einem frühzeitigen Erstarren der Befestigungsmasse kommen. Dadurch fällt der Umsatz bei der radikalischen Kettenpolymerisation wesentlich geringer aus, was zu einer Verringerung der Lastwerte beiträgt.

Da Temperaturschwankungen auf der Baustelle sich nicht vermeiden lassen, besteht nach wie vor ein Bedarf an Zweikomponenten-Reaktivharz-Systemen, welche sowohl bei hohen als auch bei niedrigen Temperaturen die Homogenität und die damit verbundene Reproduzierbarkeit der Lastwerte gewährleisten.

Um oben genannte Probleme zu adressieren, wird bei den auf dem Markt befindlichen Befestigungsmassen der Anteil an Reaktivverdünnern erhöht, was letztendlich zu einer Verringerung des Harzanteils in der Masse führt. Nicht selten beträgt der Anteil an Reaktivverdünnern mindestens 50%, bezogen auf das Reaktivharz.

Die Erhöhung des Anteils an Reaktivverdünnern führt allerdings auch zu einigen Nachteilen, die sich vor allem bei der Anwendung der Befestigungsmasse zur Befestigung von Verankerungsmittel in Bohrlöchern bemerkbar machen.

Ein weiterer ebenfalls erheblicher Nachteil ist, dass durch die Reaktivverdünner zwar die Viskosität gesenkt wird, so dass die Massen mittels eines Auspressgerätes per Hand ausgebracht werden können, durch den erhöhten Anteil an niedrigviskosen Verbindungen die rheologischen Eigenschaften der Massen aber negativ beeinflusst werden, wie etwa die Thixotropie. Dies wird bei den im Markt befindlichen Produkten gelöst, in dem den Massen Mittel zur Anpassung der Rheologie, wie Thixotropiermittel, zugegeben werden, die meist teuer sind und die Herstellkosten in die Höhe treiben.

Trotz der Verwendung von Thixotropiermitteln neigen die Massen der kommerziell erhältlichen Produkte zum sogenannten Nachlaufen. Die Massen sind in Gebinden mit mehreren Kammern, welche die Komponenten der meist mehrkomponentigen, fließfähigen, pastösen Masse enthalten und bei denen die Kammern im Wesentlichen durch Kartuschen oder Folienschläuche gebildet werden, enthalten. "Gebinde" umfassen beispielsweise Kartuschen mit einem oder mehreren Aufnahmeräumen für eine oder mehrere Komponenten der auszubringenden ein- oder mehrkomponentigen Masse, die direkt oder z.B. in Folienbeutel verpackt in den Aufnahmeräumen der Kartusche vorgesehen sind. Die Kartuschen sind in Allgemeinen aus Hartplastik, daher werden sie auch Hartkartuschen genannt. Der Begriff "Gebinde" umfasst zudem mit einer oder mehreren Komponenten der auszubringenden ein- oder mehrkomponentigen Masse befüllte Folienbeutel, die in einen separaten oder an der Auspressvorrichtung angeordneten Aufnahmekörper, wie ein Kartuschenhalter, eingesetzt werden.

Herstellungsbedingt sind insbesondere pastöse Massen kompressibel, was sehr stark zum einem dynamischen Verhalten das Gesamtsystems, bestehend aus Masse, Gebinde und Auspressgerät, führt.

Beim Ausbringen der Massen erfolgt der Auspressvorgang intermittierend, d.h. hubweise. Zu Beginn des Auspressvorgangs, d.h. beim Beginn des Auspresshubes, werden die Massen in den Kartuschenkammern bzw. die Folienbeutel aufgrund ihrer Kompressibilität zunächst zusammengepresst, bis der Druck in den Kartuschenkammern bzw. den Folienbeuteln so groß ist, dass die Massen beginnen auszufließen. Ist dieser Punkt erreicht und hält die Auspressbewegung weiter an, fließen die Massen im planmäßigen Mischungsverhältnis aus den Kartuschenkammern bzw. Folienbeuteln und werden einem Mischelement, wie einem Statikmischer zugeführt. Am Ende des Auspresshubes entspannt sich das System, bis der Druck in den Kartuschenkammern bzw. den Folienbeuteln soweit abgefallen ist, dass ein Fließen der Massen nicht mehr erfolgt (auch Entspannungsphase genannt). In dieser Entspannungsphase wird weiterhin ein Fließen der Massen beobachtet, obwohl keine Hubbewegung mehr erfolgt, das sogenannte Nachlaufen.

Es besteht daher Bedarf an Reaktivharzkomponenten deren rheologische Eigenschaften, insbesondere die Thixotropie trotz der verringerten Viskosität nicht negativ beeinflusst werden. Ferner besteht Bedarf an Reaktivharz-Systemen, die ein verbessertes Nachlaufverhalten, also ein verringertes Nachlaufen, zeigen.

Eine Aufgabe der vorliegenden Erfindung ist die Beeinflussung der Eigenschaften einer Reaktivharzkomponente, die allein auf die Struktur des Backbone-Harz zurückzuführen ist, nicht jedoch auf die Präsenz von zusätzlichen Verbindungen, wie z. B. Additive. Hauptsächlich ist es Aufgabe der vorliegenden Erfindung die rheologischen Eigenschaften eines Zwei- oder Mehrkomponenten-Reaktivharz-Systems mittels des enthaltenden Backbone-Harzes zu steuern. Insbesondere ist es Aufgabe der vorliegenden Erfindung Reaktivharzkomponenten für Zwei- oder Mehrkomponenten-Reaktivharz-Systeme, bereitzustellen, die neben einer niedrigen Viskosität eine verbesserte Thixotropie aufweisen und die ein deutlich verbessertes Nachlaufverhalten der Massen beim Auspressen aufweisen.

Diese Aufgaben werden durch die Verwendung nach Anspruch 1 gelöst.

Die Erfindung beruht auf der Erkenntnis, dass es möglich ist, die bisher in Befestigungsmassen eingesetzten höherviskosen Harze durch kleinere, niedrigviskose Backbone-Harze zu ersetzen, um die Viskosität und damit die Auspresskräfte einer Befestigungsmasse, genauer Reativharzkomponente, zu verringern, ohne jedoch die rheologischen Eigenschaften der Masse negativ zu beeinflussen.

Überraschend hat sich herausgestellt, dass es durch die Verwendung der hierin beschriebenen niedrigviskosen Backbone-Harze möglich ist, eine Reaktivharzkomponente bereitzustellen, die trotz deren niedriger Viskosität vorteilhafte rheologische Eigenschaften gegenüber Reaktivharzkomponenten, die ähnliche niedrigviskose Backbone-Harze enthalten, aufweisen. Dies zeigt sich in einer verbesserten Thixotropie, so dass die Reaktivharzkomponenten auch ohne den zusätzlichen Einsatz von Additiven, wie Thixotropiermittel, etwa bei Überkopfanwendungen nicht aus dem Bohrloch fließen und beim Auspressen der Massen weniger nachlaufen.

Zum besseren Verständnis der Erfindung werden die folgenden Erläuterungen zum Herstellungsverfahren für ein Reaktivharz und zur hierin verwendeten Terminologie als sinnvoll erachtet.

Das Herstellungsverfahren für ein Reaktivharz verläuft, hier erläutert am Beispiel eines Xylylendiisocyanat-basierten Urethanmethacrylates, typischerweise wie folgt:

### 1. Herstellung Backbone-Harz/Reaktivharz-Masterbatch

Xylylendiisocyanat und Hydroxypropylmethacrylat (HPMA) werden in Anwesenheit eines Katalysators und mindestens eines Inhibitors (dient dazu, das durch die Polymerisation gebildete Backbone-Harz zu stabilisieren, häufig auch Stabilisator oder Prozessstabilisator genannt) zur Reaktion gebracht. Hierbei entsteht das Backbone-Harz.

Das nach Ende der Reaktion erhaltene Reaktionsgemisch wird als Reaktivharz-Masterbatch bezeichnet. Dieses wird nicht weiter aufgearbeitet, d.h. das Backbone-Harz wird nicht isoliert.

### 2. Herstellung Reaktivharz

Zu dem Reaktivharz-Masterbatch werden nach Abschluss der Reaktion zum Backbone-Harz ein Beschleuniger-Inhibitor-System, d.h. eine Kombination aus einem oder mehreren zusätzlichen Inhibitoren und einem oder mehreren Beschleunigern sowie gegebenenfalls mindestens ein Reaktivverdünner gegeben.

Hierdurch erhält man das Reaktivharz.

Das Beschleuniger-Inhibitor-System dient dazu, die Reaktivität des Reaktiv-Harzes einzustellen, also den Zeitpunkt einzustellen, bis zu dem das Reaktiv-Harz nach Zugabe eines Initiators noch nicht vollständig ausgehärtet ist und bis zu welchem Zeitpunkt daher eine mit dem Reaktiv-Harz angemischte Dübelmasse nach dem Mischen mit dem Initiator verarbeitbar bleibt.

Der Inhibitor in dem Beschleuniger-Inhibitor-System kann gleich dem Inhibitor bei der Herstellung des Backbone-Harzes sein, wenn dieser auch dazu geeignet ist, die Reaktivität einzustellen, oder ein anderer Inhibitor sein, wenn er nicht beide Funktionen aufweist. 4-Hydroxy-2,2,6,6-tetramethyl-piperidinyl-1-oxyl (TEMPOL) etwa kann als Stabilisator und als Inhibitor zu Einstellung der Reaktivität eingesetzt werden.

### 3. Herstellung Reaktivharzkomponente

Für die Verwendung des Reaktivharzes für bauliche Zwecke, insbesondere für die chemische Befestigung, werden nach der Herstellung des Reaktivharzes ein oder mehrere anorganische Zuschlagstoffe, wie Additive und/oder Füllstoffe, gegeben.

Hierdurch wird die Reaktivharzkomponente erhalten.

Im Sinne der Erfindung bedeuten die verwendeten Begriffe:
- *"Backbone-Harz"* ein üblicherweise festes oder hochviskoses radikalisch polymerisierbares Harz, welches durch Polymerisation (z.B. nach Zugabe eines Initiators in Gegenwart eines Beschleunigers) härtet und in der Regel ohne Reaktivverdünner und ohne weiterer Reinigung vorliegt und damit Verunreinigung enthalten kann;
- *"Reaktivharz-Masterbatch"* das Reaktionsprodukt der Reaktion zur Herstellung des Backbone-Harzes, also eine Mischung aus Backbone-Harz, Reaktivverdünner und gegebenenfalls weiteren Bestandteilen der Reaktionsmischung;
- *"Reaktivharz"* eine Mischung aus Reaktivharz-Masterbatch, mindestens einem Beschleuniger und mindestens einem Inhibitor (auch als Beschleuniger-Inhibitor-System bezeichnet), mindestens einem Reaktivverdünner und gegebenenfalls weiteren Additiven; das Reaktivharz ist typischerweise flüssig oder viskos und kann zu einer Reaktivharzkomponente weiterverarbeitet werden; hierin wird das Reaktivharz auch als *"Harzmischung"* bezeichnet;
- *"Inhibitor"* einen Stoff, der eine unerwünschte radikalische Polymerisation während der Synthese oder der Lagerung eines Harzes oder einer Harz-haltigen Zusammensetzung unterdrückt (diese Stoffe werden in Fachkreisen auch als *"Stabilisator"* bezeichnet) bzw. der eine radikalische Polymerisation eines Harzes nach Zugabe eines Initiators (üblicherweise in Verbindung mit einem Beschleuniger) zeitlich verzögert (diese Stoffe werden in Fachkreisen auch als *"Inhibitor"* bezeichnet - die jeweilige Bedeutung des Begriffes erschließt sich aus dem Kontext);
- *"Beschleuniger"* ein Reagenz, welches mit dem Initiator eine Reaktion eingeht, so dass bereits bei niedrigen Temperaturen durch den Initiator größere Mengen an Radikalen erzeugt werden, oder welches die Zerfallsreaktion des Initiators katalysiert;
- *"Reaktivverdünner"* flüssige oder niedrigviskose Monomere und Backbone-Harze, welche andere Backbone-Harze oder den Reaktivharz-Masterbatch verdünnen und dadurch die zu deren Applikation notwendige Viskosität verleihen, zur Reaktion mit dem Backbone-Harz befähigte funktionelle Gruppen enthalten und bei der Polymerisation (Härtung) zum überwiegenden Teil Bestandteil der gehärteten Masse (z.B. des Mörtels) werden; Reaktivverdünner werden auch co-polymerisierbares Monomer genannt;
- *"Reaktivharzkomponente"* eine flüssige oder viskose Mischung aus Reaktivharz und Füllstoffen und optional weiteren Komponenten, z.B. Additiven; typischerweise ist die Reaktivharzkomponente eine der beiden Komponenten eines Zweikomponenten-Reaktivharz-Systems zur chemischen Befestigung;
- *"Initiator"* einen Stoff, der (üblicherweise in Kombination mit einem Beschleuniger) reaktionsinitierende Radikale bildet;
- *"Härterkomponente"* eine Zusammensetzung, die einen Initiator für die Polymerisation eines Backbone-Harzes enthält; die Härterkomponente kann fest oder flüssig sein und neben dem Initiator ein Lösungsmittel sowie Füllstoffe und/oder Additive enthalten; typischerweise ist die Härterkomponente neben der Reaktivharzkomponente die andere der beiden Komponenten eines Zweikomponenten-Reaktivharz-Systems zur chemischen Befestigung;
- *"Mörtelmasse*/*Befestigungsmasse"* die Zusammensetzung, die durch das Mischen der Reaktivharzkomponente mit der Härterkomponente erhalten wird und als solche direkt zur chemischen Befestigung verwendet werden kann;
- *"Reaktivharz-System"* allgemein ein System, das voneinander getrennt gelagerte Komponenten umfasst, so dass eine Härtung des in einer Komponente enthaltenen Backbone-Harzes erst nach dem Mischen der Komponenten erfolgt;
- *"Zweikomponenten-System"* bzw. *"Zweikomponenten-Reaktivharz-System"* ein Reaktivharz-System, das zwei voneinander getrennt gelagerte Komponenten, eine Reaktivharzkomponente (A) und eine Härterkomponente (B), umfasst, so dass eine Härtung des in der Reaktivharzkomponente enthaltenen Backbone-Harzes erst nach dem Mischen der beiden Komponenten erfolgt;
- *"Mehrkomponenten-System"* bzw. *"Mehrkomponenten-Reaktivharz-System"* ein Reaktivharz-System, das mehrere voneinander getrennt gelagerte Komponenten umfasst, unter anderem eine Reaktivharzkomponente (A) und eine Härterkomponente (B), so dass eine Härtung des in der Reaktivharzkomponente enthaltenen Backbone-Harzes erst nach dem Mischen aller Komponenten erfolgt;
- *"bauliche Zwecke"* jegliche Anwendung zur Erstellung und Instandhaltung bzw. - setzung von Bauteilen und Bauwerken, als Polymerbeton, als Beschichtungsmasse auf Kunstharzbasis oder als kalthärtende Straßenmarkierung; insbesondere die Verstärkung von Bauteilen und Bauwerken, beispielsweise Wände, Decken oder Böden, die Befestigung von Bauteilen, wie Platten oder Blöcken, z. B. aus Stein, Glas oder Kunststoff, an Bauteilen oder Bauwerken, etwa durch Kleben (bauliches Kleben) und ganz besonders die chemische Befestigung von Verankerungsmitteln, wie Ankerstangen, Bolzen oder dergleichen in Aussparungen, wie Bohrlöchern;
- *"chemische Befestigung"* eine (stoff- und/oder formschlüssige) Befestigung von Verankerungsmitteln, wie Ankerstangen, Bolzen, Bewehrungseisen, Schrauben oder dergleichen in Aussparungen, wie Bohrlöchern, insbesondere in Bohrlöchern in verschiedenen Untergründen, insbesondere mineralischen Untergründen, wie solche auf der Grundlage von Beton, Porenbeton, Ziegelwerk, Kalksandstein, Sandstein, Naturstein, Glas und dergleichen, und metallischen Untergründen, wie solche aus Stahl;
- *"Rheologie"* die Wissenschaft, die sich mit dem Verformungs- und Fließverhalten von Materie unter dem Einfluss einer mechanischen Kraft beschäftigt;
- *"Thixotropie"* in der Rheologie eine Zeitabhängigkeit der Fließeigenschaften bei nichtnewtonschen Fluiden, bei der die Viskosität infolge andauernder äußerer Einflüsse ab- oder zunimmt und erst nach beendigter Beanspruchung wieder in die Ausgangsviskosität zurückkehrt;
- *"aliphatische Kohlenwasserstoffgruppe"* eine acyclische und cyclische, gesättigte oder ungesättigte Kohlenwasserstoffgruppe, die nicht aromatisch sind (PAC, 1995, 67, 1307; Glossary of class names of organic compounds and reactivity intermediates based on structure (IUPAC Recommendations 1995));
- *"aromatische Kohlenwasserstoffgruppe",* eine cyclische, planare Kohlenwasserstoffgruppe mit aromatischem System, die aufgrund ihres delokalisierten Elektronensystems energetisch günstiger als ihre nicht aromatischen Mesomere und deshalb chemisch stabiler sind (PAC, 1995, 67, 1307; Glossary of class names of organic compounds and reactivity intermediates based on structure (IUPAC Recommendations 1995) page 1319);
- *"aromatisch-aliphatische Kohlenwasserstoffgruppe",* auch *"araliphatische Kohlenwasserstoffgruppe",* eine Kohlenwasserstoffgruppe mit einer aromatischen Kohlenwasserstoffgruppe an die eine oder mehrere aliphatische Kohlenwasserstoffgruppe(n) angebunden ist/sind, wobei die aliphatische Kohlenwasserstoffgruppe als Brücke zu einer funktionellen Gruppe dient, so dass die funktionelle Gruppe nicht direkt an die aromatische Kohlenwasserstoffgruppe gebunden wird;
- *"aliphatische Kohlenwasserstoffgruppe"* eine acyclische und cyclische, gesättigte oder ungesättigte Kohlenwasserstoffgruppe, die nicht aromatisch sind (PAC, 1995, 67, 1307; Glossary of class names of organic compounds and reactivity intermediates based on structure (IUPAC Recommendations 1995));
- *"cycloaliphatische Kohlenwasserstoffgruppe"* eine Stoffgruppe von ringförmigen, gesättigten Kohlenwasserstoffen, wobei die Ringe Seitenketten tragen können; sie werden zu den alicyclischen Verbindungen gezählt; hierzu zählen insbesondere monocyclische Kohlenwasserstoffe, wobei von dem Begriff auch di- oder höhercyclische Kohlenwasserstoffe umfasst sein sollen;
- *"aromatisches Diisocyanat'* eine Verbindung, bei der die beiden Isocyanatgruppen direkt an ein aromatisches Kohlenwasserstoffgerüst gebunden sind;
- *"aromatisch-aliphatisches Diisocyanat',* auch *"araliphatisches Diisocyanat'* ein Diisocyanat, in dem die beiden Isocyanatgruppen nicht direkt an ein aromatisches Kohlenwasserstoffgerüst sondern an das aromatische Kohlenwasserstoffgerüst gebundene Alkylengruppen gebunden sind, so dass die Alkylengruppe als Linker zwischen dem aromatischen Kohlenwasserstoffgerüst und jeweils der Isocyanatgruppe fungiert;
- *"(Meth)acryl...*/*...(meth)acryl...",* dass sowohl die "Methacryl.../...methacryl..."- als auch die "Acryl.../...acryl..."-Verbindungen gemeint sein sollen; bevorzugt sind in der vorliegenden Erfindung "Methacryl.../...methacryl..." -Verbindungen gemeint;
- *"ein", "eine", "einer"* als Artikel vor einer chemischen Verbindungsklasse, z.B. vor dem Wort "Urethanmethacrylat", dass mindestens eine, d.h., eine oder mehrere unter diese chemische Verbindungsklasse fallende Verbindungen, z.B. verschiedene Urethanmethacrylate, gemeint sein können. In einer bevorzugten Ausführungsform ist mit diesem Artikel nur eine einzelne Verbindung gemeint;
- *"mindestens ein", "mindestens eine", "mindestens einer"* zahlenmäßig *"ein oder mehrere".* In einer bevorzugten Ausführungsform ist mit diesem Begriff zahlenmäßig *"ein", "eine", "einer"* gemeint;
- *"enthalten" und "umfassen",* dass neben den genannten Bestandteilen noch weitere vorhanden sein können. Diese Begriffe sind einschließlich gemeint und umfassen daher auch *"bestehen aus". "Bestehen aus" ist* abschließend gemeint und bedeutet, dass keine weiteren Bestandteile vorhanden sein können. In einer bevorzugten Ausführungsform bedeuten die Begriffe *"enthalten" und "umfassen"* den Begriff *"bestehen aus*";
- "*etwa*" vor einem Zahlenwert einen Bereich von ± 5% dieses Wertes, bevorzugt ± 2% dieses Wertes, bevorzugter ± 1% dieses Wertes, besonders bevorzugt ± 0% dieses Wertes (also genau diesen Wert);
- ein durch Zahlen begrenzter Bereich, dass die beiden Eckwerte und jeder Wert innerhalb dieses Bereichs einzeln offenbart sind.

Alle in diesem Text genannten Normen (z.B. DIN-Normen) wurden in der zum Anmeldetag dieser Anmeldung aktuellen Ausgabe verwendet.

Ein erster Gegenstand der Erfindung ist die Verwendung einer Verbindung der allgemeinen Formel (I) 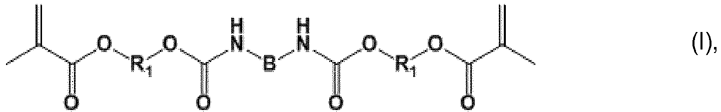 worin B
(i) eine zweiwertige aromatische Kohlenwasserstoffgruppe,
(ii) eine zweiwertige aromatisch-aliphatische Kohlenwasserstoffgruppe, oder
(iii) eine zweiwertige lineare, verzweigte oder cyclische aliphatische Kohlenwasserstoffgruppe oder eine aliphatische Kohlenwasserstoffgruppe, die eine cycloaliphatische Struktureinheit umfasst, ist, und
jedes R₁ unabhängig voneinander eine verzweigte oder lineare aliphatische C₁-C₁₅-Alkylengruppe ist,
in einer Reaktivharzkomponente für die chemische Befestigung zur Verbesserung der thixotropen Eigenschaften der Reaktivharzkomponente und/oder des Nachlaufverhaltens eines die Reaktivharzkomponente umfassenden Reaktivharz-Systems.

### (i) zweiwertige aromatische Kohlenwasserstoffgruppe

Die Kohlenwasserstoffgruppe B kann eine zweiwertige aromatische Kohlenwasserstoffgruppe sein, bevorzugt eine C₆-C₂₀-Kohlenwasserstoffgruppe und weiter bevorzugt eine C₆-C₁₄-Kohlenwasserstoffgruppe. Die aromatische Kohlenwasserstoffgruppe kann substituiert sein, insbesondere durch Alkylreste, worunter Alkylreste mit einem bis vier Kohlenstoffatomen bevorzugt sind.

In einer Ausführungsform enthält die aromatische Kohlenwasserstoffgruppe einen Benzolring, der substituiert sein kann.

In einer alternativen Ausführungsform enthält die aromatische Kohlenwasserstoffgruppe zwei kondensierte Benzolringe oder zwei Benzolringe, die über eine Alkylengruppe, wie eine Methylen- oder Ethylengruppe verbrückt sind, wovon zwei Benzolringe, die über eine Alkylengruppe, wie eine Methylen- oder Ethylengruppe verbrückt sind, bevorzugt sind. Sowohl die Benzolringe als auch die Alkylenbrücke kann substitutiert sein, bevorzugt mit Alkylgruppen.

Die aromatische Kohlenwasserstoffgruppe ist von aromatischen Diisocyanaten abgeleitet, wobei "aromatisches Diisocyanat" bedeutet, dass die beiden Isocyanatgruppen direkt an ein aromatisches Kohlenwasserstoffgerüst gebunden sind. Geeignete aromatische Kohlenwasserstoffgruppen sind zweiwertige Gruppen, wie sie durch Entfernung der Isocyanatgruppen aus einem aromatischen Diisocyanat erhalten werden, beispielsweise eine zweiwertige Phenylengruppe aus einem Benzoldiisocyanat, eine Methylphenylengruppe aus einem Toluoldiisocyanat (TDI) oder eine Ethylphenylengruppe aus einem Ethylbenzoldiisocyanat, eine zweiwertige Methylendiphenylengruppe aus einem Methylendiphenyldiisocyanat (MDI) oder eine zweiwertige Naphthylgruppe aus einem Naphthalendiisocyanat (NDI).

Besonders bevorzugt ist die aromatische Kohlenwasserstoffgruppe abgeleitet von 1,3-Diisocyanatobenzol, 1,4-Diisocyanatobenzol, 2,4-Diisocyanatotoluol, 2,6-Diisocyanatotoluol, 2,4'-Diphenylmethandiisocyanat, 4,4'-Diphenylmethandiisocyanat oder 1,5-Diisocyanatonaphthalin.

### (ii) zweiwertige aromatisch-aliphatische Kohlenwasserstoffgruppe

Die Kohlenwasserstoffgruppe B kann eine zweiwertige aromatisch-aliphatische Kohlenwasserstoffgruppe, insbesondere eine zweiwertige aromatisch-aliphatische Kohlenwasserstoffgruppe Z der Formel (Z) 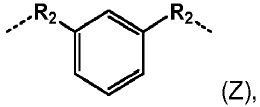 worin R₂ eine zweiwertige verzweigte oder lineare aliphatische C₁-C₆-Alkylengruppe, bevorzugt C₁-C₃-Alkylengruppe ist, sein.

Die aromatisch-aliphatische Kohlenwasserstoffgruppe ist von aromatisch-aliphatischen Diisocyanaten abgeleitet, wobei "aromatisch-aliphatisches Diisocyanat" bedeutet, dass die beiden Isocyanatgruppen nicht direkt an den aromatischen Kern, sondern an die Alkylengruppen gebunden sind.

Geeignete aromatisch-aliphatische Kohlenwasserstoffgruppen sind zweiwertige Gruppen, wie sie durch Entfernung der Isocyanatgruppen aus einem aromatisch-aliphatischen Diisocyanat erhalten werden, wie beispielsweise aus Isomeren aus Bis(1-isocyanato-1-methylethyl)-benzol und Xylylendiisocyanat (Bis-(isocyanatomethyl)-benzol), bevorzugt aus 1,3-Bis(1-isocyanato-1-methylethyl)-benzol oder m-Xylylendiisocyanat (1,3-Bis-(isocyanatomethyl)benzol).

### (iii) zweiwertige lineare, verzweigte oder cyclische aliphatische Kohlen wasserstoffgruppe

Alternativ kann die Kohlenwasserstoffgruppe B eine zweiwertige lineare, verzweigte oder cyclische aliphatische Kohlenwasserstoffgruppe sein, die bevorzugt aus der Gruppe bestehend aus Pentylen-, Hexylen-, Heptylen- oder Octylengruppen ausgewählt ist. Besonders bevorzugt ist in dieser Ausführungsform die lineare aliphatische Kohlenwasserstoffgruppe B eine Hexylengruppe.

In einer weiter alternativen Ausführungsform kann die Kohlenwasserstoffgruppe B eine zweiwertige aliphatische Kohlenwasserstoffgruppe sein, die eine cycloaliphatische Struktureinheit umfasst, insbesondere eine Kohlenwasserstoffgruppe der Formel (Y) 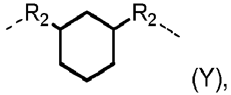 worin R₂ eine zweiwertige verzweigte oder lineare aliphatische C₁-C₆-Alkylengruppe, bevorzugt C₁-C₃-Alkylengruppe, ist, die bevorzugt aus der Gruppe bestehend aus 3-Methylen-3,5,5-Tetramethylcyclohexylen-, Methylendicyclohexylen- und 1,3-Dimethylencyclohexylgruppen ausgewählt ist. Besonders bevorzugt ist in dieser Ausführungsform die cycloaliphatische Kohlenwasserstoffgruppe eine 3-Methylen-3,5,5-Trimethylcyclohexylen- oder 1,3-Dimethylencyclohexylengruppe.

Die aliphatische Kohlenwasserstoffgruppe ist von aliphatischen Diisocyanaten abgeleitet, was lineare und verzweigte aliphatische Diisocyanate und cycloaliphatische Diisocyanate einschließt.

Geeignete aliphatische Kohlenwasserstoffgruppen sind zweiwertige Gruppen, wie sie durch Entfernung der Isocyanatgruppen aus einem aliphatischen Diisocyanat erhalten werden.

Besonders bevorzugt ist die aliphatische Kohlenwasserstoffgruppe abgeleitet von aliphatischen Diisocyanaten, wie z. B. 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethylcyclohexan (Isophorondiisocyanat; IPDI), 1-Isocyanato-1-methyl-4(3)-isocyanatomethylcyclohexan, 2,4'-und 4,4'-Diisocyanatodicyclohexylmethan (H₁₂MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan, 1,3-Dimethyl-5,7-diisocyanatoadamantan.

R₁ ist jeweils unabhängig voneinander eine verzweigte oder lineare aliphatische C₁-C₁₅-Alkylengruppe, die substituiert sein kann. R₁ ist von Hydroxyalkylmethacrylaten abgeleitet und umfasst zweiwertige Alkylengruppen, wie sie durch Entfernung der Hydroxylgruppen und der Methacrylatgruppe erhalten werden.

In einer Ausführungsform ist die Alkylengruppe R₁ zweiwertig.

In einer alternativen Ausführungsform kann sie aber auch drei- oder höherwertig sein, so dass die Verbindung der Formel (I) auch mehr als zwei Methacrylatgruppen aufweisen kann, auch wenn dies nicht direkt aus der Formel (I) ersichtlich ist.

Bevorzugt ist die Alkylengruppe R₁ eine zweiwertige lineare oder verzweigte C₁-C₁₅-Alkylengruppe, bevorzugt C₁-C₆-Alkylengruppe und besonders bevorzugt eine C₁-C₄-Alkylengruppe. Dazu zählen insbesondere die Methylen-, Ethylen-, Propylen-, *i*-Propylen-, *n*-Butylen-, 2-Butylen-, *sec.*-Butylen-, *tert.*-Butylen-, *n*-Pentylen-, 2-Pentylen-, 2-Methylbutylen-, 3-Methylbutylen-, 1,2-Dimethylpropylen-, 1,1-Dimethylpropylen-, 2,2-Dimethylpropylen-, 1-Ethylpropylen-, *n*-Hexylen-, 2-Hexylen-, 2-Methylpentylen-, 3-Methylpentylen-, 4-Methylpentylen-, 1,2-Dimethylbutylen-, 1,3-Dimethylbutylen-, 2,3-Dimethylbutylen-, 1,1-Dimethylbutylen-, 2,2-Dimethylbutylen-, 3,3-Dimethylbutylen-, 1,1,2-Trimethylpropylen-, 1,2,2-Trimethylpropylen-, 1-Ethylbutylen-, 2-Ethylbutylen-, 1-Ethyl-2-methylpropylen-, *n-*Heptylen-, 2-Heptylen-, 3-Heptylen-, 2-Ethylpentylen-, 1-Propylbutylen- oder die Octylengruppe, worunter die Ethylen-, Propylen- und *i*-Propylengruppe weiter bevorzugt sind. In einer besonders bevorzugten Ausführungsform der vorliegenden Erfindung sind die beiden R₁-Gruppen identisch und eine Ethylen-, Propylen- oder *i*-Propylengruppe.

### Herstellung der Verbindungen der Formel (I)

Die niedrigviskosen Urethanmethacrylat-Verbindungen werden durch Umsetzen von zwei Äquivalenten Hydroxyalkylmethacrylat mit mindestens einem Äquivalent Diisocyanat erhalten. Das Diisocyanat und das Hydroxyalkylmethacrylat werden in Anwesenheit eines Katalysators und mindestens eines Inhibitors, welcher dazu dient, die gebildete Verbindung zu stabilisieren, zur Reaktion gebracht.

Geeignete Hydroxyalkylmethacrylate sind solche mit Alkylengruppen mit einem bis 15 Kohlenstoffatomen, wobei die Alkylengruppen linear oder verzweigt sein können. Bevorzugt sind Hydroxyalkylmethacrylate mit einem bis 10 Kohlenstoffatomen. Weiter bevorzugt sind Hydroxyalkylmethacrylate mit zwei bis sechs Kohlenstoffatomen, worunter 2-Hydroxyethylmethacrylat, 2-Hydroxypropylmethacrylat (2-HPMA), 3-Hydroxypropylmethacrylat (3-HPMA) und Glycerol-1,3-dimethacrylat besonders bevorzugt sind. Ganz besonders bevorzugt sind 2-Hydroxypropylmethacrylat (2-HPMA) oder 3-Hydroxypropylmethacrylat (3-HPMA).

Geeignete aromatische Diisocyanate sind Benzoldiisocyanat, eine Methylphenylengruppe aus einem Toluoldiisocyanat (TDI) oder eine Ethylphenylengruppe aus einem Ethylbenzoldiisocyanat, eine zweiwertige Methylendiphenylengruppe aus einem Methylendiphenyldiisocyanat (MDI) oder eine zweiwertige Naphthylgruppe aus einem Naphthalendiisocyanat (NDI).

Besonders bevorzugt ist die aromatische Kohlenwasserstoffgruppe abgeleitet von 1,3-Diisocyanatobenzol, 1,4-Diisocyanatobenzol, 2,4-Diisocyanatotoluol, 2,6-Diisocyanatotoluol, 2,4'-Diphenylmethandiisocyanat, 4,4'-Diphenylmethandiisocyanat oder 1,5-Diisocyanatonaphthalin.

Geeignete aromatisch-aliphatische Diisocyanate sind solche mit einem Benzolring als alkylsubstituierten aromatischen Kern und mit aliphatisch gebundenen Isocyanatgruppen, d.h. die Isocyanatgruppe ist an die Alkylengruppen gebunden, wie Isomeren aus Bis(1-isocyanatoethyl)-benzol, Bis(2-isocyanatoethyl)-benzol, Bis(3-isocyanatopropyl)-benzol, Bis(1-isocyanato-1-methylethyl)-benzol und Xylylendiisocyanat (Bis-(isocyanatomethyl)benzol).

Bevorzugte araliphatische Diisocyanate sind 1,3-Bis(1-isocyanato-1-methylethyl)-benzol oder *m*-Xylylendiisocyanat (1,3-Bis-(isocyanatomethyl)benzol).

Geeignete aliphatische Diisocyanate sind: wie z. B. 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethylcyclohexan (Isophorondiisocyanat; IPDI), 1-Isocyanato-1-methyl-4(3)-isocyanatomethylcyclohexan, 2,4'-und 4,4'-Diisocyanatodicyclohexylmethan (H₁₂MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan, 1,3-Dimethyl-5,7-diisocyanatoadamantan.

Geeignete aliphatische Diisocyanate mit einer cycloaliphatischen Struktureinheit sind: 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H₁₂MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan, 1,3-Dimethyl-5,7-diisocyanatoadamantan.

Besonders bevorzugt ist die Verbindung der Formel (I) eine Verbindung der allgemeinen Formel (II), (III) oder (IV): 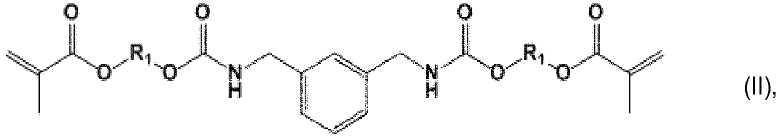 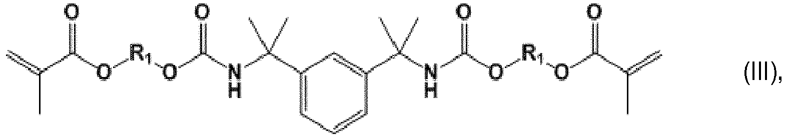 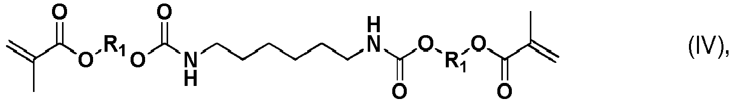 worin jedes R₁ unabhängig voneinander wie oben definiert ist.

Ganz besonders bevorzugt ist die Verbindung der Formel (I) eine Verbindung der Formel (V), (VI) oder (VII):

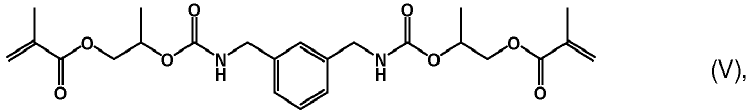

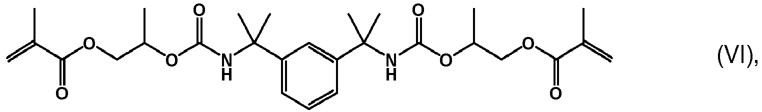

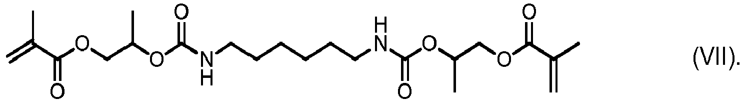

Die in den Formeln (I) bis (VII) gezeigten Strukturen sollen die erfindungsgemäßen Verbindungen nur beispielhaft darstellen, da die zu deren Herstellung verwendeten Diisocyanate sowohl als isomerenreine Verbindungen als auch als Gemische der unterschiedlichen Isomere, in jeweils unterschiedlicher Zusammensetzung, d.h. in unterschiedlichen Mengenverhältnissen, eingesetzt werden können. Die gezeigten Strukturen sind daher nicht als einschränkend auszulegen.

Folglich können die erfindungsgemäßen Verbindungen als isomerenreine Verbindungen oder als Isomerengemische, in unterschiedlicher Zusammensetzung vorliegen, die gegebenenfalls in üblicher Art und Weise getrennt werden können. Sowohl die reinen Isomeren als auch die Isomerengemische sind Gegenstand der vorliegenden Erfindung. Gemische mit unterschiedlichen Anteilen an isomeren Verbindungen sind ebenfalls Gegenstand der Erfindung.

Für den Fall, dass bei der Herstellung der erfindungsgemäßen Verbindungen nicht alle Isocyanatgruppen umgesetzt werden oder ein Teil der Isocyanatgruppen vor der Reaktion etwa durch eine Nebenreaktion in andere Gruppen umgewandelt werden, werden Verbindungen erhalten, die entweder als Hauptverbindungen oder als Verunreinigungen in den Reaktivharz-Masterbatches enthalten sein können. Diese Verbindungen sind, sofern sie für die erfindungsgemäßen Zwecke verwendet werden können auch von der Erfindung umfasst.

Die Verbindungen der Formel (I) werden zur Herstellung einer Reaktivharzkomponente verwendet. Erfindungsgemäß können hierdurch die rheologischen Eigenschaften, insbesondere die Thixotropie der Reaktivharzkomponente positiv beeinflusst werden. Zunächst wird unter Verwendung der Verbindung der Formel (I) wie oben beschrieben als Backbone-Harz ein Reaktivharz hergestellt, das neben der Verbindung der Formel (I) einen Inhibitor, einen Beschleuniger und gegebenenfalls mindestens einen Reaktivverdünner enthält. Da das Backbone-Harz nach seiner Herstellung typischerweise ohne Isolierung für die Herstellung des Reaktivharzes verwendet wird, sind in der Regel auch noch die neben dem Backbone-Harz im Reaktivharz-Masterbatch enthaltenen weiteren Bestandteile im Reaktivharz vorhanden, wie etwa ein Katalysator.

Der Anteil der Verbindung der allgemeinen Formel (I) in dem Reaktivharz beträgt von 25 Gew.-% bis 65 Gew.-%, vorzugsweise von 30 Gew.-% bis 60 Gew.-%, besonders bevorzugt von 33 Gew.-% bis 55 Gew.-%, bezogen auf das Gesamtgewicht des Reaktivharzes.

Als Inhibitor sind die für radikalisch polymerisierbare Verbindungen üblicherweise verwendeten stabilen Radikale, wie *N*-Oxyl-Radikale geeignet, wie sie dem Fachmann bekannt sind.

Der Inhibitor kann zum einen dazu dienen, eine unerwünschte radikalische Polymerisation während der Synthese des Backbone-Harzes oder der Lagerung des Reaktivharzes und der Reaktivharzkomponente zu unterdrücken. Er kann auch dazu dienen - gegebenenfalls zusätzlich - die radikalische Polymerisation des Backbone-Harzes nach Zugabe des Initiators zeitlich zu verzögern und dadurch die Verarbeitungszeit des Reaktivharzes oder der Reaktivharzkomponente nach dem Mischen mit dem Härtungsmittel einzustellen.

Als stabile *N*-Oxyl-Radikale können beispielsweise solche verwendet werden, wie sie in der DE 199 56 509 A1 und der DE 195 31 649 A1 beschrieben sind. Derartige stabile Nitroxylradikale sind vom Typ Piperidinyl-*N*-oxyl oder Tetrahydropyrrol-*N*-oxyl oder eine Mischung daraus.

Bevorzugte stabile Nitroxylradikale sind ausgewählt aus der Gruppe bestehend aus 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet) und Mischungen aus zwei oder mehreren dieser Verbindungen, wobei 1-Oxyl-2,2,6,6-tetramethylpiperidin-4-ol (TEMPOL) besonders bevorzugt ist. Das TEMPOL ist bevorzugt das in den Beispielen verwendete TEMPOL.

Neben dem Nitroxylradikal vom Typ Piperidinyl-*N*-oxyl oder Tetrahydropyrrol-*N*-oxyl können sowohl zur weiteren Stabilisierung des Reaktivharzes oder der das Reaktivharz enthaltenden Reaktivharzkomponente (A) oder anderer das Reaktivharz enthaltender Zusammensetzungen als auch zur Einstellung der Harzreaktivität ein oder mehrere weitere Inhibitoren vorhanden sein.

Hierfür sind die für radikalisch polymerisierbare Verbindungen üblicherweise verwendeten Inhibitoren geeignet, wie sie dem Fachmann bekannt sind. Bevorzugt sind diese weiteren Inhibitoren unter phenolischen Verbindungen und nicht-phenolischen Verbindungen und/oder Phenothiazinen, ausgewählt.

Als phenolische Inhibitoren, sind Phenole, wie 2-Methoxyphenol, 4-Methoxyphenol, 2,6-Di-tert-butyl-4-methylphenol, 2,4-Di-tert-butylphenol, 2,6-Di-tert-butylphenol, 2,4,6-Trimethylphenol, 2,4,6-Tris(dimethylaminomethyl)phenol, 4,4'-Thio-bis(3-methyl-6-tert-butylphenol), 4,4'-Isopropylidendiphenol, 6,6'-Di-tert-butyl-4,4'-bis(2,6-di-tert-butylphenol), 1,3,5-Trimethyl-2,4,6-tris(3,5-di-tert-butyl-4-hydroxybenzyl)benzol, 2,2'-Methylen-di-p-cresol, Catechole, wie Brenzkatechin, und Catecholderivate, wie Butylbrenzkatechine, wie 4-tert-Butylbrenzkatechin und 4,6-Di-tert-butylbrenzkatechin, Hydrochinone, wie Hydrochinon, 2-Methylhydrochinon, 2-tert-Butylhydrochinon, 2,5-Di-tert-butylhydrochinon, 2,6-Di-tert-butylhydrochinon, 2,6-Dimethylhydrochinon, 2,3,5-Trimethylhydrochinon, Benzochinon, 2,3,5,6-Tetrachloro-1,4-benzochinon, Methylbenzochinon, 2,6-Dimethylbenzochinon, Naphthochinon, oder Gemische von zweien oder mehreren davon, geeignet. Diese Inhibitoren sind oft Bestandteil von kommerziellen radikalisch härtenden Reaktivharzkomponenten.

Als nicht-phenolische Inhibitoren kommen vorzugsweise Phenothiazine, wie Phenothiazin und/oder Derivate oder Kombinationen davon, oder stabile organische Radikale, wie etwa Galvinoxyl- und *N*-oxyl-Radikale, jedoch nicht vom Piperidinyl-*N-*oxyl- oder Tetrahydropyrrol-*N*-oxyl-Typ, in Betracht, wie Aluminium*-N-*nitrosophenylhydroxylamin, Diethylhydroxylamin, Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim und dergleichen.

Ferner können in para-Stellung zur Hydroxylgruppe substituierte Pyrimidinol- oder Pyridinol-Verbindungen, wie sie in der Patentschrift DE 102011 077 248 B1 beschrieben sind, als Inhibitoren eingesetzt werden.

Bevorzugt sind die weiteren Inhibitoren ausgewählt aus der Gruppe der Catechole, Catecholderivate, Phenothiazine, tert-Butylcatechol, Tempol oder ein Gemisch von Zwei oder mehr davon. Besonders bevorzugt sind die weiteren Inhibitoren ausgewählt aus der Gruppe der Catechole und Phenothiazine. Ganz besonders bevorzugt sind die in den Beispielen verwendeten weiteren Inhibitoren, bevorzugt etwa in den in den Beispielen angegebenen Mengen.

Die weiteren Inhibitoren können, abhängig von den gewünschten Eigenschaften des Reaktivharzes, entweder alleine oder als Kombination von zweien oder mehreren davon verwendet werden.

Der Inhibitor oder die Inhibitormischung wird zugesetzt in der Fachwelt bekannten üblichen Mengen, bevorzugt in einer Menge von etwa 0,0005 bis etwa 2 Gew.-%, stärker bevorzugt von etwa 0,01 bis etwa 1 Gew.-%, noch stärker bevorzugt von etwa 0,05 bis etwa 1 Gew.-%, noch stärker bevorzugt von etwa 0,2 bis etwa 0,5 Gew.-%, bezogen auf das Reaktivharz.

Die Verbindungen der allgemeinen Formel (I), insbesondere bei der Verwendung in Reaktivharzen und Reaktivharzkomponenten für die chemische Befestigung und das bauliche Kleben, werden im Allgemeinen durch Peroxide als Härtungsmittel gehärtet. Die Peroxide werden bevorzugt durch einen Beschleuniger initiiert, damit auch bei niedrigen Anwendungstemperaturen eine Polymerisation stattfindet. Der Beschleuniger wird bereits dem Reaktivharz zugegeben.

Geeignete Beschleuniger, die dem Fachmann bekannt sind, sind beispielsweise Amine, bevorzugt tertiäre Amine und/oder Metallsalze.

Geeignete Amine sind unter folgenden Verbindungen ausgewählt: Dimethylamin, Trimethylamin, Ethylamin, Diethylamin, Triethylamin, n-Propylamin, Di-n-propylamin, Tri-n-propylamin, Isopropylamin, Diisopropylamin, Triisopropylamin, n-Butylamin, Isobutylamin, tert-Butylamin, Di-n-butylamin, Diisobutylamin, Tri-isobutylamin, Pentylamin, Isopentylamin, Diisopentylamin, Hexylamin, Octylamin, Dodecylamin, Laurylamin, Stearylamin, Aminoethanol, Diethanolamin, Triethanolamin, Aminohexanol, Ethoxyaminoethan, Dimethyl-(2-chloroethyl)amin, 2-Ethylhexylamin, Bis-(2-chloroethyl)amin, 2-Ethylhexylamin, Bis-(2-ethylhexyl)amin, N-Methylstearylamin, Dialkylamine, Ethylendiamin, N,N'-Dimethylethylendiamin, Tetramethylethylendiamin, Diethylentriamin, Permethyldiethylentriamin, Triethylentetramin, Tetraethylenpentamin, 1,2-Diaminopropan, Di-propylentriamin, Tripropylentetramin, 1,4-Diaminobutan, 1,6-Diaminohexan, 4-Amino-1-diethylaminopentan, 2,5-Diamino-2,5-dimethylhexan, Trimethylhexamethylendiamin, N,N-Dimethylaminoethanol, 2-(2-Diethylaminoethoxy)ethanol, Bis-(2-hydroxyethyl)-oleylamin, Tris-[2-(2-hydroxy-ethoxy)-ethyl]amin, 3-Amino-1-propanol, Methyl-(3-aminopropyl)ether, Ethyl-(3-aminopropyl)ether, 1,4-Butandiol-bis(3-aminopropylether), 3-Dimethylamino-1-propanol, 1-Amino-2-propanol, 1-Diethylamino-2-propanol, Diisopropanolamin, Methyl-bis-(2-hydroxypropyl)-amin, Tris-(2-hydroxypropyl)amin, 4-Amino-2-butanol, 2-Amino-2-methylpropanol, 2-Amino-2-methyl-propandiol, 2-Amino-2-hydroxymethylpropandiol, 5-Aiethylamino-2-pentanon, 3-Methylaminopropionsäurenitril, 6-Aminohexansäure, 11-Aminoundecansäure, 6-Aminohexansäureethylester, 11-Aminohexansäureisopropylester, Cyclohexylamin, N-Methylcyclohexylamin, N,N-Dimethylcyclohexylamin, Dicyclohexylamin, N-Ethylcyclohexylamin, N-(2-Hydroxyethyl)-cyclohexylamin, N,N-Bis-(2-hydroxyethyl)-cyclohexylamin, N-(3-Aminopropyl)-cyclohexylamin, Aminomethylcyclohexan, Hexahydrotoluidin, Hexahydrobenzylamin, Anilin, N-Methylanilin, N,N-Dimethylanilin, N,N-Diethylanilin, N,N-Di-propylanilin, iso-Butylanilin, Toluidine, Diphenylamin, Hydroxyethylanilin, Bis-(hydroxyethyl)anilin, Chloranilin, Aminophenole, Aminobenzoesäuren und deren Ester, Benzylamin, Dibenzylamin, Tribenzylamin, Methyldibenzylamin, a-Phenylethylamin, Xylidin, Diisopropylanilin, Dodecylanilin, Aminonaphthalin, N-Methylaminonaphthalin, N,N-Dimethylaminonaphthalin, N,N-Dibenzylnaphthalin, Diaminocyclohexan, 4,4'-Diaminodicyclohexylmethan, Diamino-dimethyl-dicyclohexylmethan, Phenylendiamin, Xylylendiamin, Diaminobiphenyl, Naphthalindiamine, Toluidine, Benzidine, 2,2-Bis-(aminophenyl)-propan, Aminoanisole, Amino-thiophenole, Aminodiphenylether, Aminocresole, Morpholin, N-Methylmorpholin, N-Phenylmorpholin, Hydroxyethylmorpholin, N-Methylpyrrolidin, Pyrrolidin, Piperidin, Hydroxyethylpiperidin, Pyrrole, Pyridine, Chinoline, Indole, Indolenine, Carbazole, Pyrazole, Imidazole, Thiazole, Pyrimidine, Chinoxaline, Aminomorpholin, Dimorpholinethan, [2,2,2]-Diazabicyclooctan und N,N-Dimethyl-p-toluidin.

Als Beschleuniger wird erfindungsgemäß Di-iso-propanol-p-toluidin oder N,N-Bis(2-hydroxyethyl)-m-toluidin eingesetzt.

Bevorzugte Amine sind Anilin-Derivate und N,N-Bisalkylarylamine, wie N,N,-Dimethylanilin, N,N-Diethylanilin, N,N-Dimethyl-p-toluidin, N,N-Bis(hydroxyalkyl)arylamine, N,N-Bis(2-hydroxyethyl)aniline, N,N-Bis(2-hydroxyethyl)toluidin, N,N-Bis(2-hydroxypropyl)anilin, N,N-Bis(2-hydroxypropyl)toluidin, N,N-Bis(3-methacryloyl-2-hydroxypropyl)-p-toluidin, N,N-Dibutoxyhydroxypropyl-p-toluidin und 4,4'-Bis(dimethylamino)diphenylmethan. Besonders bevorzugt ist Di-iso-propanol-p-toluidin.

Polymere Amine, wie solche die durch Polykondensation von N,N-Bis(hydroxylalkyl)anilin mit Dicarbonsäuren oder durch Polyaddition von Ethylenoxid oder anderen Epoxiden und diese Amine erhalten werden, sind ebenso als Beschleuniger geeignet.

Geeignete Metallsalze sind, zum Beispiel Cobaltoctoat oder Cobaltnaphthenoat sowie Vanadium-, Kalium-, Kalzium-, Kupfer-, Mangan- oder Zirkoniumcarboxylate. Weitere geeignete Metallsalze sind die weiter oben beschriebenen Zinn-Katalysatoren.

Sofern ein Beschleuniger verwendet wird, wird er in einer Menge von 0,01 bis 10 Gew.-%, bevorzugt 0,2 bis 5 Gew.-%, bezogen auf das Reaktivharz, eingesetzt.

Das Reaktivharz kann noch mindestens einen Reaktivverdünner enthalten, sofern dies erforderlich wird. Dabei kann ein gegebenenfalls bei der Herstellung des Backbone-Harzes eingesetzte Überschuss an hydroxyfunktionalisiertem (Meth)acrylat als Reaktivverdünner fungieren. Daneben, wenn das hydroxyfunktionalisierte (Meth)acrylat in etwa äquimolaren Mengen mit der Isocyanatgruppe eingesetzt wird, oder zusätzlich, falls ein Überschuss an hydroxyfunktionalisiertem (Meth)acrylat verwendet wird, können weitere Reaktivverdünner dem Reaktionsgemisch zugegeben werden, welche strukturell von dem hydroxyfunktionalisierten (Meth)acrylat verschieden sind.

Geeignete Reaktivverdünner sind niederviskose, radikalisch co-polymerisierbare Verbindungen, bevorzugt kennzeichnungsfreie Verbindungen, die zugegeben werden um unter anderem die Viskosität des Urethanmethacrylats bzw. der Vorstufen bei dessen Herstellung anzupassen, falls erforderlich.

Geeignete Reaktivverdünner sind in den Anmeldungen EP 1 935 860 A1 und DE 195 31 649 A1 beschrieben. Vorzugsweise enthält das Reaktivharz (die Harzmischung) als Reaktivverdünner einen (Meth)acrylsäureester, wobei besonders bevorzugt aliphatische oder aromatische C₅-C₁₅-(Meth)acrylate ausgewählt werden. Geeignete Beispiele umfassen: 2-Hydroxypropyl(meth)acrylat, 3-Hydroxypropyl(meth)acrylat, 1,2-Ethandioldi(meth)acrylat, 1,3-Propandioldimethacrylat, 1,3-Butandioldi(meth)acrylat, 1,4-Butandioldi(meth)acrylat, Trimethylolpropantri(meth)acrylat, Phenylethyl(meth)acrylat, Tetrahydrofurfuryl(meth)acrylat, Ethyltriglykol(meth)acrylat, *N,N-*Dimethylaminoethyl(meth)acrylat, N,N-Dimethylaminomethyl(meth)acrylat, N,N-Diethylaminoethyl(meth)acrylat, Acetoacetoxyethyl(meth)acrylat, Isobornyl(meth)acrylat, 2-Ethylhexyl(meth)acrylat, tert-Butylcyclohexyl(meth)acrylat, Benzyl(meth)acrylat, Methyl(meth)acrylat, n-Butyl(meth)acrylat, iso-Butyl(meth)acrylat, 3-Trimethoxysilylpropyl(meth)acrylat, Isodecyl(meth)acrylat, Diethylenglykoldi(meth)acrylat, Triethylenglykoldi(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1,0.2.6-decan, 3-(Meth)acryloyl-oxymethyl-tricylo-5.2.1,0.2.6-decan, 3-(Meth)cyclopentadienyl(meth)acrylat, und Decalyl-2-(meth)acrylat; PEG-di(meth)acrylat wie PEG200-di(meth)acrylat, Tetraehtylenglykoldi(meth)acrylat, Solketal(meth)acrylat, Cyclohexyl(meth)acrylat, Phenoxyethyldi(meth)acrylat, 2-Phenoxyethyl(meth)acrylat, Hexandiol-1,6-di(meth)acrylat, 1,2-Butandioldi(meth)acrylat, Methoxyethyl(meth)acrylat, Butyldiglykol(meth)acrylat, tert-Butyl(meth)acrylat und Norbornyl(meth)acrylat. Methacrylate sind gegenüber Acrylaten bevorzugt.

Besonders bevorzugt sind 2- und 3-Hydroxypropylmethacrylat, 1,2-Ethandioldimethacrylat, 1,4-Butandioldimethacrylat, 1,3-Butandioldimethacrylat, Glyceroldimethacrylat, Trimethylolpropantrimethacrylat, Acetoacetoxyethylmethacrylat, Isobornylmethacrylat, Bisphenol-A-dimethacrylat, ethoxylierte Bisphenol-A-methacrylate wie E2BADMA oder E3BADMA, Trimethylcyclohexylmethacrylat, 2-Hydroxyethylmethacrylat, PEG200-dimethacrylat und Norbornylmethacrylat und ganz besonders bevorzugt sind ein Gemisch aus 2- und 3-Hydroxypropylmethacrylat und 1,4-Butandioldimethacrylat oder eine Mischung aus diesen drei Methacrylaten.

Am bevorzugtesten ist ein Gemisch aus 2- und 3-Hydroxypropylmethacrylat. Grundsätzlich können auch andere übliche radikalisch polymerisierbare Verbindungen, allein oder im Gemisch mit den (Meth)acrylsäureestern, als Reaktivverdünner eingesetzt werden, z. B. Methacrylsäure, Styrol, α-Methylstyrol, alkylierte Styrole, wie tert-Butylstyrol, Divinylbenzol und Vinyl- sowie Allylverbindungen, wobei die nicht kennzeichnungspflichtigen Vertreter davon bevorzugt sind. Beispiele für derartige Vinyl- oder Allylverbindungen sind Hydroxybutylvinylether, Ethylenglycoldivinylether, 1,4-Butandioldivinylether, Trimethylolpropandivinylether, Trimethylolpropantrivinylether, Mono-, Di-, Tri-, Tetra- und Polyalkylenglycolvinylether, Mono-, Di-, Tri-, Tetra- und Polyalkylenglycolallylether, Adipinsäuredivinylester, Trimethylolpropandiallylether und Trimethylolpropantriallylether.

Der bzw. die Reaktivverdünner wird bzw. werden in einer Menge bis zu 65 Gew.-%, vorzugsweise bis zu 60 Gew.-%, weiter bevorzugt bis zu 55 Gew.-%, besonders bevorzugt in Mengen unter 50 Gew.-%, bezogen auf das Reaktivharz, zugegeben werden.

Ein beispielhaftes Reaktivharz umfasst eine Verbindung der allgemeinen Formel (I) wie oben beschrieben, 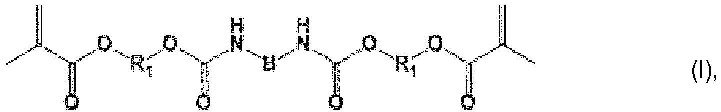 worin B
(i) eine zweiwertige aromatische Kohlenwasserstoffgruppe,
(ii) eine zweiwertige aromatisch-aliphatische Kohlenwasserstoffgruppe, insbesondere eine Kohlenwasserstoffgruppe der Formel (Z) 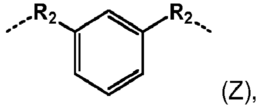 worin R₂ eine zweiwertige verzweigte oder lineare aliphatische C₁-C₆-Alkylengruppe ist, oder
(iii) eine zweiwertige lineare, verzweigte oder aliphatische Kohlenwasserstoffgruppe oder eine aliphatische Kohlenwasserstoffgruppe, die eine cycloaliphatische Struktureinheit umfasst, ist, und
jedes R₁ unabhängig voneinander eine verzweigte oder lineare aliphatische C₁-C₁₅-Alkylengruppe ist, als Backbone-Harz, ein stabiles Nitroxylradikal als Inhibitor, ein substituiertes Toluidin als Beschleuniger und gegebenenfalls einen Reaktivverdünner.

Ein bevorzugtes Reaktivharz umfasst (a) eine Verbindung der Formel (II), (III) oder (IV) 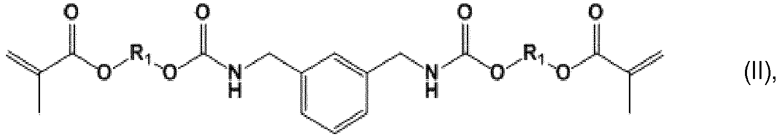 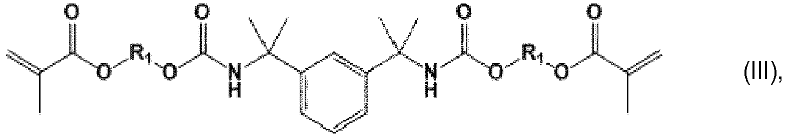 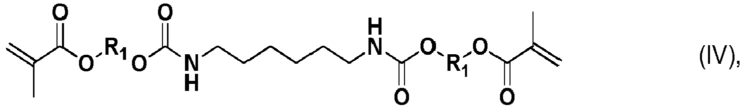 worin jedes R₁ unabhängig voneinander eine verzweigte oder lineare aliphatische C₁-C₁₅-Alkylengruppe ist, als Backbone-Harz, ein stabiles Nitroxylradikal als Inhibitor, ein substituiertes Toluidin als Beschleuniger und gegebenenfalls einen Reaktivverdünner.

Ein weiter bevorzugtes Reaktivharz umfasst eine Verbindung der Formel (V), (VI) oder (VII) 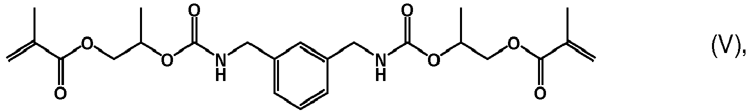 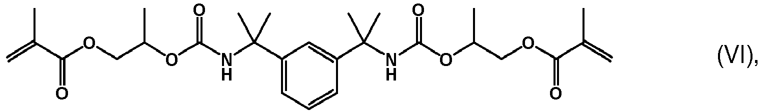 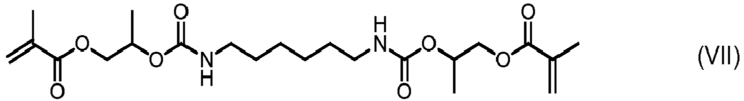 als Backbone-Harz, ein stabiles Nitroxylradikal als Inhibitor, ein substituiertes Toluidin als Beschleuniger und einen Reaktivverdünner.

Ein besonders bevorzugtes Reaktivharz umfasst eine Verbindung der Formel (V), (VI) oder (VII) als Backbone-Harz, 4-Hydroxy-2,2,6,6-tetramethyl-piperidinyl-1-oxyl (TEMPOL) als Inhibitor, Di-iso-propanol-p-toluidin als Beschleuniger und eine Mischung aus Hydroxypropylmethacrylat und 1,4-Butandioldimethacrylat (BDDMA) als Reaktivverdünner.

Ein eben beschriebenes Reaktivharz wird zur Herstellung einer Reaktivharzkomponente erhalten, wobei dem Reaktivharz übliche Füllstoffe und/oder Additive zugegeben werden. Diese Füllstoffe sind typischerweise anorganische Füllstoffe und Additive, wie beispielsweise weiter unten beschrieben.

Es sei darauf hingewiesen, dass einige Stoffe sowohl als Füllstoff und, ggf. in modifizierter Form, auch als Additiv verwendet werden können. Beispielsweise dient pyrogene Kieselsäure in ihrer polaren, nicht nachbehandelten Form eher als Füllstoff und in ihrer apolaren, nachbehandelten Form eher als Additiv. In Fällen, in denen genau derselbe Stoff als Füllstoff oder Additiv verwendet werden kann, soll seine Gesamtmenge die hierin festgelegte Obergrenze für Füllstoffe nicht überschreiten.

Der Anteil des Reaktivharzes in der Reaktivharzkomponente beträgt bevorzugt von etwa 10 bis etwa 70 Gew.-%, stärker bevorzugt von etwa 30 bis etwa 50 Gew.-%, bezogen auf die Reaktivharzkomponente. Dementsprechend beträgt der Anteil der Füllstoffe bevorzugt von etwa 90 bis etwa 30 Gew.-%, stärker bevorzugt von etwa 70 bis etwa 50 Gew.-%, bezogen auf die Reaktivharzkomponente.

Damit ergeben sich folgende Anteile für die Bestandteile, die in der Reaktivharzkomponente enthalten sind bzw. sein können: etwa 2,5 Gew.-% bis etwa 45,5 Gew.-%, bevorzugt etwa 9 Gew.-% bis etwa 30 Gew.-%, besonders bevorzugt von etwa 10 Gew.-% bis etwa 27 Gew.-% an Verbindung der allgemeinen Formel (I); bis zu etwa 45 Gew.-%, bevorzugt bis zu etwa 40 Gew.-%, weiter bevorzugt bis zu etwa 30 Gew.-%, besonders bevorzugt weniger als 25 Gew.-% an Reaktivverdünner; etwa 0,00005 Gew.-% bis etwa 1,4 Gew.-%, bevorzugt etwa 0,001 bis etwa 0,7 Gew.-%, stärker bevorzugt etwa 0,015 bis etwa 0,5 Gew.-% und noch stärker bevorzugt etwa 0,06 Gew.-% bis etwa 0,25 Gew.-% an Inhibitor; und sofern ein Beschleuniger verwendet wird, etwa 0,001 Gew.-% bis etwa 7 Gew.-%, bevorzugt etwa 0,06 Gew.-% bis etwa 2,5 Gew.-% an Beschleuniger; jeweils bezogen auf das Gesamtgewicht der Reaktivharzkomponente.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z.B. pyrogene Kieselsäure, insbesondere polare, nicht nachbehandelte pyrogene Kieselsäure), Silikate, Aluminiumoxide (z.B. Tonerde), Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z.B. Aluminatzement (oft auch als Tonerdezement bezeichnet) oder Portlandzement), Metalle, wie Aluminium, Ruß, ferner Holz, mineralische oder organische Fasern, oder dergleichen, oder Gemische von zwei oder mehr davon Verwendung. Die Füllstoffe können in beliebigen Formen vorliegen, beispielsweise als Pulver oder Mehl, oder als Formkörper, z.B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von etwa 10 mm und einen Minimaldurchmesser von etwa 1 nm. Das heißt, der Durchmesser ist etwa 10 mm oder irgendein Wert von weniger als etwa 10 mm, aber mehr als etwa 1 nm. Bevorzugt ist der maximale Durchmesser ein Durchmesser von etwa 5 mm, bevorzugter von etwa 3 mm, noch bevorzugter von etwa 0,7 mm. Ganz besonders bevorzugt ist ein maximaler Durchmesser von etwa 0,5 mm. Der bevorzugtere Minimaldurchmesser ist etwa 10 nm, noch bevorzugter etwa 50 nm, ganz besonders bevorzugt etwa 100 nm. Durchmesserbereiche, die sich durch Kombination dieser maximalen Durchmesser und Minimaldurchmesser ergeben, sind besonders bevorzugt. Bevorzugt und deutlicher verstärkend wirken sich jedoch die globulären, inerten Stoffe (Kugelform) aus. Auch Core-Shell-Partikel, bevorzugt in Kugelform, können als Füllstoffe verwendet werden.

Bevorzugte Füllstoffe sind ausgewählt aus der Gruppe bestehend aus Zement, Kieselsäure, Quarz, Quarzsand, Quarzmehl, und Mischungen aus zwei oder mehreren davon. Für die Reaktivharzkomponente (A) besonders bevorzugt sind Füllstoffe ausgewählt aus der Gruppe bestehend aus Zement, pyrogener Kieselsäure, insbesondere unbehandelter, polarer pyrogener Kieselsäure, Quarzsand, Quarzmehl, und Mischungen aus zwei oder mehreren davon. Ganz besonders bevorzugt ist für die Reaktivharzkomponente (A) eine Mischung aus Zement (insbesondere Aluminatzement (oft auch als Tonerdezement bezeichnet) oder Portlandzement), pyrogener Kieselsäure und Quarzsand. Für die Härterkomponente (B) ist pyrogene Kieselsäure als alleiniger Füllstoff oder als einer von mehreren Füllstoffen bevorzugt; besonders bevorzugt sind neben der pyrogenen Kieselsäure noch einer oder mehrere weitere Füllstoffe vorhanden.

Als Additive finden übliche Additive Verwendung, also Thixotropiermittel, wie gegebenenfalls organisch oder anorganisch nachbehandelte pyrogene Kieselsäure (falls sie nicht schon als Füllstoff verwendet wird), insbesondere apolar nachbehandelte pyrogene Kieselsäure, Bentonite, Alkyl- und Methylcellulosen, Rhizinusölderivate oder dergleichen, Weichmacher, wie Phthalsäure- oder Sebacinsäureester, weitere Stabilisatoren neben den erfindungsgemäß verwendeten Stabilisatoren und Inhibitoren, Antistatikmittel, Verdickungsmittel, Flexibilisatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon. Auch nicht reaktive Verdünnungsmittel (Lösungsmittel) können, vorzugsweise in einer Menge bis zu 30 Gew.-%, bezogen auf die Gesamtmenge der Reaktivharzkomponente enthalten sein, wie Niederalkylketone, z.B. Aceton, Diniederalkyl-niederalkanoylamide, wie Dimethylacetamid, Niederalkylbenzole, wie Xylole oder Toluol, Phthalsäureester oder Paraffine, Wasser oder Glykole. Ferner können Metallfänger in Form von oberflächenmodifizierten pyrogenen Kieselsäuren in der Reaktivharzkomponente enthalten sein. Bevorzugt ist mindestens ein Thixotropiermittel als Additiv vorhanden, besonders bevorzugt eine organisch oder anorganisch nachbehandelte pyrogene Kieselsäure, ganz besonders bevorzugt eine apolar nachbehandelte pyrogene Kieselsäure.

In dieser Hinsicht wird Bezug genommen auf die Anmeldungen WO 02/079341 und WO 02/079293 sowie WO 2011/128061 A1.

Der Anteil der Additive in der Reaktivharzkomponente kann bis zu etwa 5 Gew.-%, bezogen auf die Reaktivharzkomponente, betragen.

Die unter der erfindungsgemäßen Verwendung einer Verbindung der Formel (I) erhaltenen Reaktivharzkomponenten finden üblicherweise als Reaktivharzkomponente eines Reaktivharz-Systems, wie ein Mehrkomponenten-System, typischerweise ein Zweikomponenten-System aus einer Reaktivharzkomponente (A) und einer Härterkomponente (B) Verwendung. Dieses Mehrkomponenten-System kann in Form eines Patronen-Systems, eines Kartuschen-Systems oder eines Folienbeutel-Systems vorliegen. Bei der bestimmungsgemäßen Verwendung des Systems werden die Komponenten entweder unter Einwirkung mechanischer Kräfte oder durch Gasdruck aus den Patronen, Kartuschen oder Folienbeuteln ausgepresst, miteinander vermischt, vorzugsweise mit Hilfe eines Statikmischers, durch den die Bestandteile hindurchgeführt werden, und appliziert.

Ein Vorteil, der sich aus der Verwendung einer Verbindung der Fomel (I) wie oben beschrieben ergibt, ist eine verbesserte Thixotropie. Dies wirkt sich insbesondere bei der Anwendung der Masse bei Bohrlöchern in der Wand und insbesondere der Decke aus, da die Massen nach dem Einbringen in das Bohrloch nicht mehr fließen und somit nicht aus dem Bohrloch herauslaufen. Dies ist überraschend, da eigentlich erwartet wird, dass die Verwendung von niedrigviskosen Verbindungen, die Viskosität und die Auspresskräfte einer diese Verbindungen enthaltenden Reaktivharzkomponenten erniedrigen, auch dazu führt, dass die Masse nach dem Einbringen in das Bohrloch zum Herauslaufen neigt.

Ein weiterer Vorteil, der sich aus der Verwendung einer Verbindung der Fomel (I) wie oben beschrieben ergibt, ist ein verbessertes Nachlaufverhalten. Dies äußert sich dadurch, dass nach dem Ausbringen der Masse aus dem Auspressgerät weniger Masse nachläuft und dadurch eine geringere Verschmutzung und weniger Verwurf auftritt.

Daher eignet sich eine Reaktivharzkomponente, die eine oben beschriebene niedrigviskose Verbindung enthält, insbesondere zu Verwendung in einem Reaktivharz-System.

Ein weiterer Gegenstand der vorliegenden Erfindung ist daher auch ein Reaktivharz-System mit einer eben beschriebenen Reaktivharzkomponente (A) und einer Härterkomponente (B), die einen Initiator für die Urethanmethacrylat-Verbindung enthält.

Der Initiator ist gewöhnlich ein Peroxid. Alle dem Fachmann bekannten Peroxide, die zum Härten von ungesättigten Polyesterharzen und Vinylesterharzen verwendet werden, können eingesetzt werden. Derartige Peroxide umfassen organische und anorganische Peroxide, entweder flüssig oder fest, wobei Wasserstoffperoxid auch verwendet werden kann. Beispiele geeigneter Peroxide sind Peroxycarbonate (der Formel -OC(O)O-), Peroxyester (der Formel -C(O)OO-), Diacylperoxide (der Formel -C(O)OOC(O)-), Dialkylperoxide (der Formel -OO-) und dergleichen. Diese können als Oligomer oder Polymer vorliegen.

Bevorzugt sind die Peroxide aus der Gruppe der organischen Peroxide ausgewählt. Geeignete organische Peroxide sind: tertiäre Alkylhydroperoxide, wie tert-Butylhydroperoxid, und andere Hydroperoxide, wie Cumenhydroperoxid, Peroxyester oder Persäuren, wie tert-Butylperester, Benzoylperoxid, Peracetate und Perbenzoate, Laurylperoxid, einschließlich (Di)peroxyesters, Perether, wie Peroxydiethylether, Perketone, wie Methylethylketoneperoxid. Die als Härter verwendeten organischen Peroxide sind oft tertiäre Perester oder tertiäre Hydroperoxide, d.h. PeroxidVerbindungen mit tertiären Kohlenstoffatomen, die direkt an eine -O-O-acyl- oder-OOH-Gruppe gebunden ist. Aber auch Gemische dieser Peroxide mit anderen Peroxiden können erfindungsgemäß eingesetzt werden. Die Peroxide können auch gemischte Peroxide sein, d.h. Peroxide, die zwei verschiedene Peroxid-tragende Einheiten in einem Molekül aufweisen. Bevorzugt wird zum Härten (Di-benzoyl)peroxid (BPO) verwendet.

Das Reaktivharz-System kann in Form eines Zwei- oder Mehrkomponenten-Systems vorliegen, bei dem die jeweiligen Komponenten räumlich getrennt voneinander vorliegen, so dass eine Reaktion (Aushärtung) der Komponenten erst nach deren Vermischen erfolgt.

Ein Zweikomponenten-Reaktivharz-System umfasst bevorzugt die A Komponente und die B Komponente reaktionsinhibierend getrennt in unterschiedlichen Behältern, beispielsweise einer Mehrkammer-Vorrichtung, wie eine Mehrkammer-Patrone und/oder -Kartusche, aus welchen Behältern die beiden Komponenten durch Einwirkung mechanischer Presskräfte oder unter Einwirkung eines Gasdruckes ausgepresst und vermischt werden. Eine weitere Möglichkeit besteht darin, das Zweikomponenten-Reaktivharzsystem als Zweikomponenten-Kapseln zu konfektionieren, die in das Bohrloch eingeführt werden und durch schlagdrehendes Setzen des Befestigungselements zerstört werden unter gleichzeitiger Durchmischung der beiden Komponenten der Befestigungsmasse. Vorzugsweise wird hierin ein Patronensystem oder ein Injektionssystem eingesetzt, bei dem die beiden Komponenten aus den getrennten Behältern ausgepresst und durch einen statischen Mischer geführt werden, in dem sie homogen vermischt und dann über eine Düse vorzugsweise direkt in das Bohrloch ausgetragen werden.

Bei einer bevorzugten Ausführungsform des erfindungsgemäßen Reaktivharz-Systems ist das Reaktivharz-System ein Zweikomponenten-System und enthält die Reaktivharzkomponente (A) neben dem Backbone-Harz zusätzlich noch eine hydraulisch abbindende oder polykondensierbare anorganische Verbindung, insbesondere Zement, und die Härterkomponente (B) neben dem Initiator für die Polymerisation des Backbone-Harzes noch Wasser. Derartige Hybridmörtelsysteme sind ausführlich in DE 4231161 A1 beschrieben. Dabei enthält die Komponente (A) vorzugsweise als hydraulisch abbindende oder polykondensierbare anorganische Verbindung Zement, beispielsweise Portlandzement oder Tonerdezement, wobei übergangsmetalloxidfreie oder übergangsmetallarme Zemente besonders bevorzugt sind. Als hydraulisch abbindende anorganische Verbindung kann auch Gips als solcher oder in Mischung mit dem Zement eingesetzt werden. Die Komponente (A) kann als polykondensierbare anorganische Verbindung auch silikatische, polykondensierbare Verbindungen, insbesondere lösliches, gelöstes und/oder amorphes Siliziumdioxid enthaltende Stoffe wie z.B. polare, nicht nachbehandelte pyrogene Kieselsäure umfassen.

Das Volumenverhältnis von Komponente A zu Komponente B in einem Zweikomponenten-System ist vorzugsweise 3:1; 5:1, 7:1 oder 10:1, wobei auch jedes andere Verhältnis zwischen 3:1 bis 10:1 möglich ist. Besonders bevorzugt ist ein Volumenverhältnis zwischen 3:1 und 7:1.

In einer bevorzugten Ausführungsform enthält die Reaktivharzkomponente (A) also folglich:
- mindestens ein wie oben definiertes Urethan(meth)acrylat, bevorzugt eine Verbindung der Formel (II), (III) oder (IV);
- mindestens einen wie oben definierten Inhibitor vom Typ Piperidinyl-*N*-oxyl oder Tetrahydropyrrol-*N*-oxyl, bevorzugt TEMPOL;
- mindestens einen wie oben definierten Beschleuniger, bevorzugt ein Toluidin-Derivat, besonders bevorzugt Di-*iso*-propanol-*p*-toluidin;
- mindestens eine hydraulisch abbindende oder polykondensierbare anorganische Verbindung, bevorzugt Zement; und
- mindestens ein Thixotropiermittel, bevorzugt pyrogene Kieselsäure,
und die Härterkomponente (B) enthält:
- mindestens einen Initiator für die Initiierung der Polymerisation des Urethan(meth)acrylats, bevorzugt Benzoylperoxid (BPO) oder tert-Butylperoxybenzoat; und
- Wasser.

In einer bevorzugteren Ausführungsform enthält die Reaktivharzkomponente (A):
- mindestens ein wie oben definiertes Urethan(meth)acrylat, bevorzugt eine Verbindung der Formel (II), (III) oder (IV);
- mindestens einen wie oben definierten Inhibitor vom Typ Piperidinyl-*N*-oxyl oder Tetrahydropyrrol-*N*-oxyl, bevorzugt TEMPOL;
- mindestens einen Beschleuniger, bevorzugt ein Toluidin-Derivat, besonders bevorzugt Di-*iso*-propanol-*p*-toluidin;
- mindestens eine hydraulisch abbindende oder polykondensierbare anorganische Verbindung, bevorzugt Zement; und
- mindestens ein Thixotropiermittel, bevorzugt pyrogene Kieselsäure,
und die Härterkomponente (B) enthält:
- mindestens einen Initiator für die Initiierung der Polymerisation des Urethan(meth)acrylats, bevorzugt Benzoylperoxid (BPO) oder tert-Butylperoxybenzoat;
- mindestens einen Füllstoff, bevorzugt Quarzsand oder Quarzmehl; und
- Wasser.

In einer noch bevorzugteren Ausführungsform enthält die Reaktivharzkomponente (A):
- mindestens ein wie oben definiertes Urethan(meth)acrylat, bevorzugt eine Verbindung der Formel (II), (III) oder (IV);
- mindestens einen wie oben definierten Inhibitor vom Typ Piperidinyl-*N*-oxyl oder Tetrahydropyrrol-*N*-oxyl, bevorzugt TEMPOL;
- mindestens einen Beschleuniger, bevorzugt ein Toluidin-Derivat, besonders bevorzugt Di-*iso*-propanol-*p*-toluidin;
- mindestens einen weiteren Inhibitor, der ausgewählt ist aus der Gruppe besteht aus Catecholen und Phenothiazinen;
- mindestens eine hydraulisch abbindende oder polykondensierbare anorganische Verbindung, bevorzugt Zement; und
- mindestens ein Thixotropiermittel, bevorzugt pyrogene Kieselsäure,
und die Härterkomponente (B) enthält:
- mindestens einen Initiator für die Initiierung der Polymerisation des Urethan(meth)acrylats, bevorzugt Benzoylperoxid (BPO) oder tert-Butylperoxybenzoat;
- mindestens einen Füllstoff, bevorzugt Quarzsand oder Quarzmehl;
- mindestens ein Thixotropiermittel, bevorzugt pyrogene Kieselsäure; und
- Wasser.

In einer noch bevorzugteren Ausführungsform enthält die Reaktivharzkomponente (A):
- mindestens ein wie oben definiertes Urethan(meth)acrylat, bevorzugt eine Verbindung der Formel (II), (III) oder (IV);
- mindestens einen wie oben definierten Inhibitor vom Typ Piperidinyl-*N*-oxyl oder Tetrahydropyrrol-*N*-oxyl, bevorzugt TEMPOL;
- mindestens einen Beschleuniger, bevorzugt ein Toluidin-Derivat, besonders bevorzugt Di-*iso*-propanol-*p*-toluidin;
- mindestens einen weiteren Inhibitor, der ausgewählt ist aus der Gruppe besteht aus Catecholen und Phenothiazinen;
- mindestens eine hydraulisch abbindende oder polykondensierbare anorganische Verbindung, bevorzugt Zement;
- mindestens ein Thixotropiermittel, bevorzugt pyrogene Kieselsäure, und
- mindestens einen weiteren Füllstoff, bevorzugt Quarzsand,
und die Härterkomponente (B) enthält:
- Benzoylperoxid (BPO) odertert-Butylperoxybenzoat als Initiatorfür die Initiierung der Polymerisation des Urethan(meth)acrylats;
- mindestens einen Füllstoff, bevorzugt Quarzsand oder Quarzmehl;
- mindestens ein Thixotropiermittel, bevorzugt pyrogene Kieselsäure; und
- Wasser.

In einer noch bevorzugteren Ausführungsform enthält die Reaktivharzkomponente (A):
- mindestens ein wie oben definiertes Urethan(meth)acrylat, bevorzugt eine Verbindung der Formel (V), (VI) oder (VII);
- TEMPOL;
- Di-*iso*-propanol-*p*-toluidin;
- mindestens einen weiteren Inhibitor, der ausgewählt ist aus der Gruppe besteht aus Catecholen und Phenothiazinen;
- Zement;
- pyrogene Kieselsäure; und
- Quarzsand,
und die Härterkomponente (B) enthält:
- mindestens einen Initiator für die Initiierung der Polymerisation des Urethan(meth)acrylats;
- pyrogene Kieselsäure;
- Quarzsand oder Quarzmehl und
- Wasser.

In jeder dieser Ausführungsformen enthält in einer bevorzugten Ausführungsform die Reaktivharzkomponente (A) zusätzlich noch mindestens einen Reaktivverdünner. Bevorzugt ist dieser Reaktivverdünner ein Monomer oder eine Mischung aus mehreren Monomeren des Backbone-Harzes.

Die Reaktivharzkomponenten (A) und die Härterkomponenten (B) in jeder dieser Ausführungsformen sind beliebig miteinander kombinierbar.

Ein solches Reaktivharz-System findet vor allem im Baubereich Verwendung (bauliche Zwecke), beispielsweise bei der Erstellung und Instandhaltung bzw. -setzung von Bauteilen und Bauwerken, etwa aus Beton, als Polymerbeton, als Beschichtungsmasse auf Kunstharzbasis oder als kalthärtende Straßenmarkierung, zur Verstärkung von Bauteilen und Bauwerken, beispielsweise Wände, Decken oder Böden, die Befestigung von Bauteilen, wie Platten oder Blöcken, z. B. aus Stein, Glas oder Kunststoff, an Bauteilen oder Bauwerken, etwa durch Kleben (bauliches Kleben). Besonders eignet sie sich zur chemischen Befestigung. Ganz besonders eignet sie sich zur (stoff- und/oder formschlüssigen) chemischen Befestigung von Verankerungsmitteln, wie Ankerstangen, Bolzen, Bewehrungseisen, Schrauben oder dergleichen in Aussparungen, wie Bohrlöchern, insbesondere in Bohrlöchern in verschiedenen Untergründen, insbesondere mineralischen Untergründen, wie solche auf der Grundlage von Beton, Porenbeton, Ziegelwerk, Kalksandstein, Sandstein, Naturstein, Glas und dergleichen, und metallischen Untergründen, wie solche aus Stahl. In einer Ausführungsform ist der Untergrund des Bohrlochs Beton, und das Verankerungsmittel besteht aus Stahl oder Eisen. In einer weiteren Ausführungsform ist der Untergrund des Bohrlochs Stahl, und das Verankerungsmittel besteht aus Stahl oder Eisen. Hierzu werden die Komponenten in das Bohrloch injiziert, wonach die zu befestigenden Einrichtungen, wie Ankergewindestangen und dergleichen, in das mit dem aushärtenden Reaktivharz beschickte Bohrloch eingebracht und entsprechend justiert werden.

Die folgenden Beispiele dienen der weiteren Erläuterung der Erfindung.

### BEISPIELE

Zunächst wurden Reaktivharzkomponenten und Zweikomponenten-Reaktivharz-Systeme, die jeweils die Verbindung (V), (VI) oder (VII) als Backbone-Harz enthalten, hergestellt. Die dynamische Viskosität der Reaktivharzkomponenten und das rheologische Verhalten der Reaktivharzkomponenten während und nach einer erhöhten Scherung wurde untersucht. Ferner wurden an einem Zweikomponenten-Reaktivharz-System die Mengen an nachgelaufenem Material ermittelt.

### Verbindung (V)

### A1. Herstellung des Reaktivharz-Masterbatches A1 mit Verbindung (V)

In einem 2 Liter Laborglasreaktor mit Innenthermometer und Rührwelle wurden 1419 g Hydroxypropylmethacrylat vorgelegt und mit 0,22 g Phenothiazin (D Prills; Allessa Chemie), 0,54 g 4-Hydroxy-2,2,6,6-tetramethyl-piperidinyl-1-oxyl (TEMPOL; Evonik Degussa GmbH) und 0,36 g Dioctylzinndilaurat (TIB KAT®216; TIB Chemicals) versetzt. Der Ansatz wurde auf 80°C erwärmt. Anschließend wurden 490 g m-Xylendiisocyanat (TCI Europe) unter Rühren (200 U/min) über 45 Minuten zugetropft. Danach wurde noch weitere 120 Minuten bei 80°C gerührt. Hierdurch wurde der Reaktivharz-Masterbatch A1 erhalten, der 65 Gew.-% der Verbindung (V) als Backbone-Harz und 35 Gew.-% Hydroxypropylmethacrylat, bezogen auf das Gesamtgewicht des Reaktivharz-Masterbatches, enthält.

Die Verbindung (V) hat folgende Struktur:

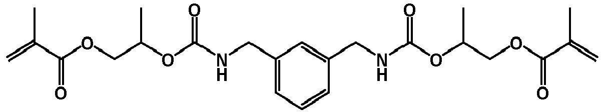

Aus dem Reaktivharz-Masterbatch A1 wurde ein Reaktivharz A2 mit Verbindung (V) als Backbone-Harz hergestellt.

### A2. Herstellung des Reaktivharzes A2

1,08 g Catechol (Catechol Flakes; RHODIA), 0,36 g *tert*-Butylbrenzkatechin (TBC Schuppen, RHODIA) und 9,2 g Di-isopropanol-p-toluidin (BASF SE) werden in einer Mischung aus 160,0 g 1,4-Butandioldimethacrylat (Visiomer 1,4-BDDMA; Evonik Degussa GmbH) und 229,2 g Reaktivharz Masterbatch aus A1 gelöst.

Aus dem Reaktivharz A2 wurde eine Reaktivharzkomponene A3 mit Verbindung (V) als Backbone-Harz hergestellt.

### A3. Herstellung der Reaktivharzkomponente A3

310,5 g Reaktivharz A2 werden mit 166,5 g Secar® 80 (Kerneos Inc.), 9,0 g Cab-OSil® TS-720 (Cabot Corporation), 16,2 g Aerosil® R 812 (Evonik Industries AG) und 397,8 g Quarzsand F32 (Quarzwerke GmbH) im Dissolver mit einem PC Laborsystem Dissolver vom Typ LDV 0.3-1 unter Vakuum vermischt. Die Mischung wurde für 2 Minuten bei 2500 U·min⁻¹ und danach für 10 Minuten bei 4500 U·min⁻¹ unter Vakuum (Druck≤100 mbar) mit einer 55 mm Dissolverscheibe und einem Randabstreifer gerührt. Hierdurch wurde die Reaktivharzkomponente A3 erhalten.

### A4. Herstellung des Zweikomponenten-Reaktivharz-Svstems A4

Zur Herstellung des Zweikomponenten-Reaktivharz-Systems A4 wurde die Reaktivharzkomponente A3 (Komponente (A)) und die Härterkomponente (Komponente (B)) des kommerziell erhältlichen Produkts HIT HY 200 (Hilti Aktiengesellschaft; Chargennummer: 8107090) in eine Plastikkartusche (Firma Ritter GmbH; Volumenverhältnis A:B = 5:1) mit den Innendurchmessern 32,5 mm (Komponente (A)) bzw. 14 mm (Komponente (B)) gefüllt. Hierdurch wurde das Zweikomponenten-Reaktivharz-System A4 (für die Messung des Nachlaufverhaltens) erhalten.

### Verbindung (VI)

### B1. Herstellung des Reaktivharz-Masterbatches B1 mit Verbindung (VI)

In einem 2 Liter Laborglasreaktor mit Innenthermometer und Rührwelle wurden 1179 g Hydroxypropylmethacrylat vorgelegt und mit 0,17 g Phenothiazin (D Prills; Allessa Chemie), 0,43 g 4-Hydroxy-2,2,6,6-tetramethyl-piperidinyl-1-oxyl (TEMPOL; Evonik Degussa GmbH) und 0,29 g Dioctylzinndilaurat (TIB KAT®216; TIB Chemicals) versetzt. Der Ansatz wurde auf 80°C erwärmt. Anschließend wurden 500 g 1,3-Bis(2-isocyanato-2-propyl)benzen (TCI Europe) unter Rühren (200 U/min) über 45 Minuten zugetropft. Danach wurde noch weitere 120 Minuten bei 80°C gerührt. Hierdurch wurde der Reaktivharz-Masterbatch B1 erhalten, der 65 Gew.-% der Verbindung (VI) als Backbone-Harz und 35 Gew.-% Hydroxypropylmethacrylat, bezogen auf das Gesamtgewicht des Reaktivharz-Masterbatches, enthält.

Die Verbindung (VI) hat folgende Struktur:

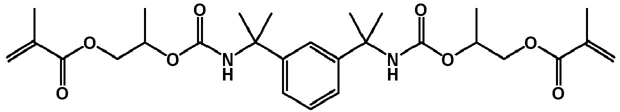

Aus dem Reaktivharz-Masterbatch B1 wurde ein Reaktivharz B2 mit Verbindung (VI) als Backbone-Harz hergestellt.

### B2. Herstellung des Reaktivharzes B2

1,08 g Catechol (Catechol Flakes; RHODIA), 0,36 g *tert*-Butylbrenzkatechin (TBC Schuppen, RHODIA) und 9,2 g Di-isopropanol-p-toluidin (BASF SE) werden in einer Mischung aus 160,0 g 1,4-Butandioldimethacrylat (Visiomer 1,4-BDDMA; Evonik Degussa GmbH) und 229,2 g Reaktivharz Masterbatch aus B1 gelöst.

Aus dem Reaktivharz B2 wurde eine Reaktivharzkomponene B3 mit Verbindung (VI) als Backbone-Harz hergestellt.

### B3. Herstellung der Reaktivharzkomponente B3

310,5 g Reaktivharz B2 werden mit 166,5 g Secar® 80 (Kerneos Inc.), 9,0 g Cab-OSil ® TS-720 (Cabot Corporation), 16,2 g Aerosil® R 812 (Evonik Industries AG) und 397,8 g Quarzsand F32 (Quarzwerke GmbH) im Dissolver mit einem PC Laborsystem Dissolver vom Typ LDV 0.3-1 unter Vakuum vermischt. Die Mischung wurde für 2 Minuten bei 2500 U·min⁻¹ und danach für 10 Minuten bei 4500 U·min⁻¹ unter Vakuum (Druck≤100 mbar) mit einer 55 mm Dissolverscheibe und einem Randabstreifer gerührt. Hierdurch wurde die Reaktivharzkomponente B3 erhalten.

### B4. Herstellung des Zweikomponenten-Reaktivharz-Systems B4

Zur Herstellung des Zweikomponenten-Reaktivharz-Systems B4 wurde die Reaktivharzkomponente B3 (Komponente (A)) und die Härterkomponente (Komponente (B)) des kommerziell erhältlichen Produkts HIT HY 200 (Hilti Aktiengesellschaft; Chargennummer: 8107090) in eine Plastikkartusche (Firma Ritter GmbH; Volumenverhältnis A:B = 5:1) mit den Innendurchmessern 32,5 mm (Komponente (A)) bzw. 14 mm (Komponente (B)) gefüllt. Hierdurch wurde das Zweikomponenten-Reaktivharz-System B4 (für die Messung des Nachlaufverhaltens) erhalten.

### Verbindung (VII)

### C1. Herstellung des Reaktivharz-Masterbatches C1 mit Verbindung (VII)

In einem 2 Liter Laborglasreaktor mit Innenthermometer und Rührwelle wurden 1444 g Hydroxypropylmethacrylat vorgelegt und mit 0,23 g Phenothiazin (D Prills; Allessa Chemie), 0,56 g 4-Hydroxy-2,2,6,6-tetramethyl-piperidinyl-1-oxyl (TEMPOL; Evonik Degussa GmbH) und 0,38 g Dioctylzinndilaurat (TIB KAT®216; TIB Chemicals) versetzt. Der Ansatz wurde auf 80°C erwärmt. Anschließend wurden 455 g Hexamethylen-1,6-diisocyanat (Sigma Aldrich) unter Rühren (200 U/min) über 45 Minuten zugetropft. Danach wurde noch weitere 60 Minuten bei 80°C gerührt. Hierdurch wurde der Reaktivharz-Masterbatch C1 erhalten, der 65 Gew.-% der Verbindung (VII) als Backbone-Harz und 35 Gew.-% Hydroxypropylmethacrylat, bezogen auf das Gesamtgewicht des Reaktivharz-Masterbatches, enthält.

Die Verbindung (VII) hat folgende Struktur:

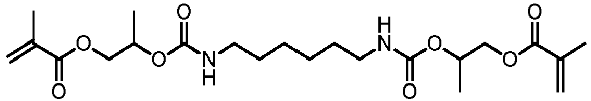

### C2. Herstellung des Reaktivharzes C2

1,08 g Catechol (Catechol Flakes; RHODIA), 0,36 g *tert*-Butylbrenzkatechin (TBC Schuppen, RHODIA) und 9,2 g Di-isopropanol-p-toluidin (BASF SE) werden in einer Mischung aus 160,0 g 1,4-Butandioldimethacrylat (Visiomer 1,4-BDDMA; Evonik Degussa GmbH) und 229,2 g Reaktivharz Masterbatch aus C1 gelöst. Hierdurch wurde das Reaktivharz C2 erhalten.

Aus dem Reaktivharz B2 wurde eine Reaktivharzkomponene B3 mit Verbindung (VI) als Backbone-Harz hergestellt.

### C3. Herstellung der Reaktivharzkomponente C3

310,5 g Reaktivharz C2 werden mit 166,5 g Secar® 80 (Kerneos Inc.), 9,0 g Cab-OSil ® TS-720 (Cabot Corporation), 16,2 g Aerosil® R 812 (Evonik Industries AG) und 397,8 g Quarzsand F32 (Quarzwerke GmbH) im Dissolver mit einem PC Laborsystem Dissolver vom Typ LDV 0.3-1 unter Vakuum vermischt. Die Mischung wurde für 2 Minuten bei 2500 U·min⁻¹ und danach für 10 Minuten bei 4500 U·min⁻¹ unter Vakuum (Druck≤100 mbar) mit einer 55 mm Dissolverscheibe und einem Randabstreifer gerührt. Hierdurch wurde die Reaktivharzkomponente C3 erhalten.

### C4. Herstellung des Zweikomponenten-Reaktivharz-Svstems C4

Zur Herstellung des Zweikomponenten-Reaktivharz-Systems C4 wurde die Reaktivharzkomponente C3 (Komponente (A)) und die Härterkomponente (Komponente (B)) des kommerziell erhältlichen Produkts HIT HY 200 (Hilti Aktiengesellschaft; Chargennummer: 8107090) in eine Plastikkartusche (Firma Ritter GmbH; Volumenverhältnis A:B = 5:1) mit den Innendurchmessern 32,5 mm (Komponente (A)) bzw. 14 mm (Komponente (B)) gefüllt. Hierdurch wurde das Zweikomponenten-Reaktivharz-System C4 (für die Messung des Nachlaufverhaltens) erhalten.

### Vergleichsbeispiel D

Zum Vergleich wurden ein Reaktivharz-Masterbatch, ein Reaktivharz und eine Reaktivharzkomponente mit Vergleichsverbindung 1 wie folgt hergestellt.

### D1. Herstellung des Vergleichsreaktivharz-Masterbatches D1 mit Vergleichsverbindung (1)

Der Vergleichsreaktivharz-Masterbatch D1 mit 65 Gew.-% an Vergleichsverbindung (1) als Backbone-Harz und 35 Gew.-% Hydroxypropylmethacrylat wurde gemäß dem Verfahren in EP 0 713 015 A1, die hiermit als Referenz eingeführt und auf deren gesamte Offenbarung verwiesen wird, hergestellt.

Das Produkt (Vergleichsverbindung (1)) hat eine Oligomerverteilung, wobei das Oligomer mit einer Wiederholungseinheit die folgende Struktur hat:

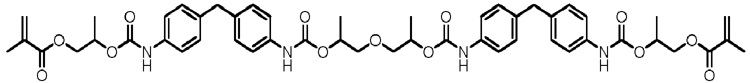

Aus dem Vergleichsreaktivharz-Masterbatch D1 wurde ein Vergleichsreaktivharz D2 mit Vergleichsverbindung (1) als Backbone-Harz hergestellt.

### D2. Herstellung des Vergleichsreaktivharzes D2

1,08 g Catechol (Catechol Flakes; RHODIA), 0,36 g *tert*-Butylbrenzkatechin (TBC Schuppen, RHODIA) und 9,2 g Di-isopropanol-p-toluidin (BASF SE) werden in einer Mischung aus 160,0 g 1,4-Butandioldimethacrylat (Visiomer 1,4-BDDMA; Evonik Degussa GmbH) und 229,2 g Vergleichsreaktivharz-Masterbatch aus D1 gelöst.

Aus dem Vergleichsreaktivharz D2 wurde eine Vergleichsreaktivharzkomponente D3 mit Vergleichsverbindung (1) als Backbone-Harz hergestellt.

### D3. Herstellung der Vergleichsreaktivharzkomponenten D3

310,5 g Vergleichsreaktivharz D2 werden mit 166,5 g Secar® 80 (Kerneos Inc.), 9,0 g Cab-OSil® TS-720 (Cabot Corporation), 16,2 g Aerosil® R 812 (Evonik Industries AG) und 397,8 g Quarzsand F32 (Quarzwerke GmbH) im Dissolver mit einem PC Laborsystem Dissolver vom Typ LDV 0.3-1 unter Vakuum vermischt. Die Mischung wurde für 2 Minuten bei 2500 U·min⁻¹ und danach für 10 Minuten bei 4500 U·min⁻¹ unter Vakuum (Drucke≤100 mbar) mit einer 55 mm Dissolverscheibe und einem Randabstreifer gerührt. Hierdurch wurde die Vergleichsreaktivharzkomponente D3 erhalten.

### D4. Herstellung des Vergleichszweikomponenten-Reaktivharz-Systems D4

Zur Herstellung des Vergleichszweikomponenten-Reaktivharz-Systems D4 wurde die Vergleichsreaktivharzkomponente D3 (Komponente (A)) und die Härterkomponente (Komponente (B)) des kommerziell erhältlichen Produkts HIT HY 200 (Hilti Aktiengesellschaft; Chargennummer: 8107090) in eine Plastikkartusche (Firma Ritter GmbH; Volumenverhältnis A:B = 5:1) mit den Innendurchmessern 32,5 mm (Komponente (A)) bzw. 14 mm (Komponente (B)) gefüllt. Hierdurch wurde das Zweikomponenten-Vergleichsreaktivharz-System D4 (für die Messung des Nachlaufverhaltens) erhalten.

### Bestimmung der rheologischen Eigenschaften

Der Einfluss der Verbindungen (V), (VI) und (VII) auf die Viskosität und auf die Thixotropie von diese Verbindungen enthaltenden Reaktivharzkomponenten wurde anhand der dynamischen Visositäten der Reaktivharzkomponenten ermittlet. Hierzu wurden die dynamischen Viskositäten der Reaktivharzkomponenten A3, B3 und C3 nach unterschiedlichen Scherungen gemessen und jeweils mit denen der Vergleichsformulierung verglichen.

### Messung der dynamischen Viskosität der Reaktivharzkomponenten A3, B3 und C3 sowie der Vergleichsreaktivharzkomponenten D3

Die Messung der dynamischen Viskosität der Reaktivharzkomponenten A3, B3 und C3 und der Vergleichsreaktivharzkomponente D3 erfolgte mit einem Platte-Platte Messsystem nach DIN 53019. Der Durchmesser der Platte betrug 20mm und der Spaltabstand betrug 3mm. Um ein Austreten der Probe aus dem Spalt zu verhindern, wurde ein Begrenzungsring aus Teflon verwendet, der einen Abstand von 1mm von der oberen Platte hatte. Die Messtemperatur betrug 25°C. Die Messmethode bestand aus drei Abschnitten: 1. Niedrige Scherung, 2. Hohe Scherung, 3. Niedrige Scherung. Beim 1. Abschnitt wurde 3 Minuten bei 0,5/s geschert. Im 2. Abschnitt wurde in 8 Stufen zu je 15 Sekunden logarithmisch die Schergeschwindigkeit von 0,8/s auf 100/s gesteigert. Die einzelnen Stufen dabei waren: 0,8/s; 1,724/s; 3,713/s; 8/s; 17,24/s; 37,13/s; 80/s; 100/s. Der 3. Abschnitt war die Wiederholung des 1. Abschnitts.

Am Ende eines jeden Abschnittes wurden die Viskositäten ausgelesen. In Tabelle 1 wird der Wert des zweiten Abschnittes bei 100/s angegeben. Es wurden jeweils drei Messungen durchgeführt, wobei die in Tabelle 1 angegebenen Werte der Mittelwert der drei Messungen ist.

Die so bestimmten dynamischen Viskositäten der Reaktivharzkomponenten A3, B3 und C3 wurden mit den dynamischen Viskositäten der Vergleichsreaktivharzkomponente D3 verglichen. Die Ergebnisse sind in Tabelle 1 zusammengefasst.

Sie zeigen, dass die erfindungsgemäße Verwendung der Verbindungen (V), (VI) und (VII) als Backbone-Harz auch zu einer Erniedrigung der dynamischen Viskosität der damit hergestellten Reaktivharzkomponenten bei Raumtemperatur (23°C) führen.

Ferner zeigen die Ergebnisse in Tabelle 1, dass nach Abschluss des 2. Messabschnitts, bei dem mit einer Scherrate von 100 s⁻¹ geschert wurde, die Reaktivharzkomponenten wieder eine hohe dynamische Viskosität erreichten, und die Reaktivharzkomponenten dementsprechend ein thixotropes Verhalten zeigen. Die dynamische Viskosität war am Ende des 2. Abschnitts wieder so hoch, dass die Masse nicht mehr zu fließen begann, so dass mit diesen Massen Überkopfanwendungen möglich sind, ohne dass ein Herausfließen der Massen aus dem Bohrloch zu befürchten ist. Dies konnte in Handversuchen gezeigt werden, bei denen die Zweikomponenten-Reaktivharz-Systeme in einen nach unten offenen Zylinder von unten her injiziert wurden. Alle Massen verblieben in dem Zylinder. Keine der Massen lief aus dem Zylinder heraus.

**Tabelle 1: Ergebnisse der Messung der dynamischen Viskositäten bei unterschiedlichen Scherraten der Reaktivharzkomponenten A3, B3 und C3 und der Vergleichsreaktivharzkomponente D3**

| | **Reaktivharz-komponente A3** | **Reaktivharz-komponente B3** | **Reaktivharz-komponente C3** | **Vergleichsreaktivharz-komponente D3** |
|---|---|---|---|---|
| **Dynamische Viskosität [Pa·s] bei einer Scherung von 0,5 s⁻¹ (1. Abschnitt)** | 156,1 | 84,1 | 122,7 | 297,0 |
| **Dynamische Viskosität [Pa·s] bei einer Scherung von 100 s⁻¹ (2. Abschnitt)** | 5,0 | 4,6 | 4,7 | 12,4 |
| **Dynamische Viskosität [Pa·s] bei einer Scherung von 0,5 s⁻¹ (3. Abschnitt)** | 61,9 | 48,0 | 64,2 | 143,6 |

### Bestimmung des Nachlaufverhaltens

Zur Bestimmung des Nachlaufverhaltens bei 0°C, 25°C und 40°C wurden die Reaktivharz-Systeme A4, B4 und C4 sowie das Vergleichsreaktivharz-Systeme F4 auf 0°C bzw. 25°C bzw. 40°C temperiert. Die Kartuschen wurden händisch mit einem 5:1 Zweikomponentenausoressgerät über einen Statikmischer (Mischer HIT RE-M; Hilti Aktiengesellschaft) ausgepresst. Ein Vorlauf von fünf Hüben wurde verworfen. Anschließend wurde ein Hub ausgepresst und nach Beendigung des Hubes das Auspressgerät nicht entriegelt. Die Masse des nach Beendigung des Hubes austretenden (nachlaufenden) Materials wurde nach Aushärtung bestimmt.

Die Massen an nachlaufendem Material der Zweikomponenten-Reaktivharz-Systeme A4, B4 und C4, die die erfindungsgemäßen Verbindungen enthalten, wurden mit der Masse an nachlaufendem Material des Vergleichszweikomponenten-Reaktivharz-Systems D4, das die Vergleichsverbindung 1 enthält, bei 0°C, bei 25°C und bei 40°C verglichen.

Es wurden jeweils fünf Messungen durchgeführt. Die Messergebnisse sind in Tabelle 2 zusammengefasst.

**Tabelle 2: Ergebnisse der Messung der Mengen an nachlaufendem Material bei den Reaktivharz-Systemen A4, B4 und C4 und des Vergleichsreaktivharz-Systems D4**

| **Zweikomponenten-Reaktivharz-System** | **Masse an nachlaufendem Material in g** | | |
|---|---|---|---|
| | **0°C** | **25°C** | **40°C** |
| **A4** | 0,63 | 0,03 | 0,91 |
| **B4** | 0,76 | 0,86 | 0,61 |
| **C4** | 0,29 | 0,25 | 0,45 |
| **D4** | 1,95 | 1,11 | 1,26 |

Die Ergebnisse in Tabelle 2 zeigen deutlich, dass trotz der niedrigeren Viskosität der Reaktivharzkomponenten A3, B3 und C3 gegenüber der der Vergleichsreaktivharzkomponente D3 und der niedrigeren Viskosität bei hoher Scherung (100 s⁻¹) (vgl. Daten aus Tabelle 1) die Systeme, die die Verbindungen (V), (VI) und (VII) als Backbone-Harz enthalten, über den gesamten Temperaturbereich deutlich weniger zum Nachlaufen neigen als die Systeme, die die Vergleichsverbindung (1) als Backbone-Harz enthalten.

## Patentansprüche

**1.** Verwendung einer Verbindung der allgemeinen Formel (I) 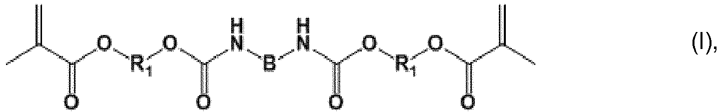 worin B
(i) eine zweiwertige aromatische Kohlenwasserstoffgruppe,
(ii) eine zweiwertige aromatisch-aliphatische Kohlenwasserstoffgruppe, oder
(iii) eine zweiwertige lineare, verzweigte oder cyclische aliphatische Kohlenwasserstoffgruppe oder eine aliphatische Kohlenwasserstoffgruppe, die eine cycloaliphatische Struktureinheit umfasst, ist, und
jedes R₁ unabhängig voneinander eine verzweigte oder lineare aliphatische C₁-C₁₅-Alkylengruppe ist,
in einer Reaktivharzkomponente für die chemische Befestigung zur Verbesserung der thixotropen Eigenschaften der Reaktivharzkomponente und/oder des Nachlaufverhaltens eines die Reaktivharzkomponente umfassenden Reaktivharz-Systems.

**2.** Verwendung nach Anspruch 1, wobei die Verbindung der allgemeinen Formel (I) eine Verbindung ist, worin B eine aromatische C₆-C₂₀-Kohlenstoffgruppe ist.

**3.** Verwendung nach Anspruch 1 oder2, wobei die Verbindung der allgemeinen Formel (I) eine Verbindung ist, worin B (i) einen gegebenenfalls substituierten Benzolring, zwei gebebenfalls substituierte kondensierte Benzolringe oder zwei gegebenenfalls substituierte Benzolringe, die über eine Alkylengruppe verbrückt sind, umfasst.

**4.** Verwendung nach einem der vorhergehenden Ansprüche, wobei die Verbindung der allgemeinen Formel (I) eine Verbindung ist, worin B (ii) eine zweiwertige aromatisch-aliphatische Kohlenwasserstoffgruppe der Formel (Z) 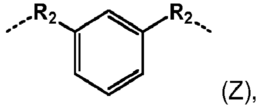 worin R₂ eine zweiwertige verzweigte oder lineare aliphatische C₁-C₆-Alkylengruppe ist.

**5.** Verwendung nach einem der Ansprüche 1 bis 3, wobei die Verbindung der allgemeinen Formel (I) eine Verbindung ist, worin B (iiia) eine zweiwertige lineare oder verzweigte aliphatische C₅-C₈-Kohlenwasserstoffgruppe ist.

**5.** Verwendung nach nach einem der Ansprüche 1 bis 3, wobei die Verbindung der allgemeinen Formel (I) eine Verbindung ist, worin B (iiib) eine aliphatische Kohlenwasserstoffgruppe (Y) ist, die eine cycloaliphatische Struktureinheit umfasst, 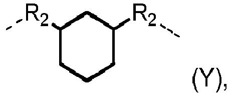 worin R₂ eine zweiwertige verzweigte oder lineare aliphatische C₁-C₆-Alkylengruppe ist.

**7.** Verwendung nach einem der vorhergehenden Ansprüche, wobei die Verbindung der Formel (I) eine Verbindung der Formel (II), (III) oder (IV) ist 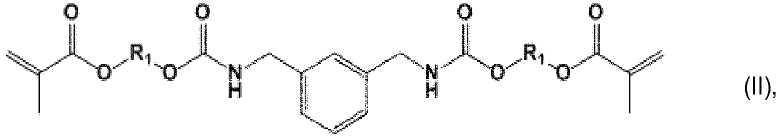 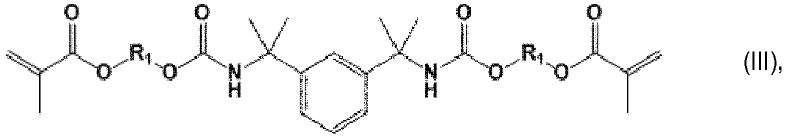 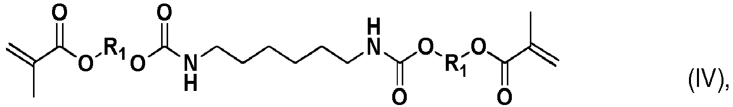 worin jedes R₁ unabhängig voneinander eine verzweigte oder lineare aliphatische C₁-C₁₅-Alkylengruppe ist.

**8.** Verwendung nach einem der vorhergehenden Ansprüche, wobei R₁ eine C₂- oder C₃-Alkylengruppe ist.

**9.** Verwendung nach einem der vorhergehenden Ansprüche, wobei die Verbindung der Formel (I) eine Verbindung der Formel (V), (VI) oder (VII) 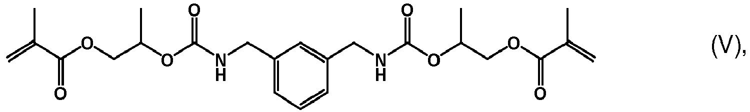 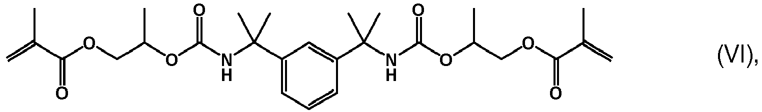 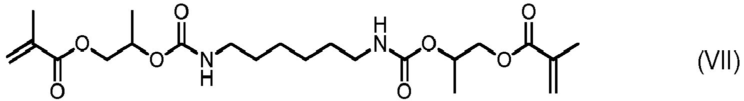 ist.

**10.** Verwendung nach einem der vorhergehenden Ansprüche, wobei die Reaktivharzkomponente mindestens einen Inhibitor, mindestens einen Beschleuniger und gegebenenfalls mindestens einen Reaktivverdünner umfasst.

**11.** Verwendung nach Anspruch 10, wobei die Reaktivharzkomponente ferner organische und/oder anorganische Füllstoffe und/oder Additive umfasst.

**12.** Verwendung nach einem der vorhergehenden Ansprüche, wobei der Anteil der Verbindung der allgemeinen Formel (I) in der Reaktivharzkomponente etwa 2,5 Gew.-% bis etwa 45 Gew.-% beträgt, bezogen auf die Reaktivharzkomponente.

**13.** Verwendung nach einem der Ansprüche 1 bis 12 in Form eines Zwei-Komponenten-Systems.
